# FASCICULE DE BREVET EUROPEEN

(11) **EP 4 035 075 B1**
(45) Date de publication et mention de la délivrance du brevet: **25.11.2026**
(21) Numéro de dépôt: 20790361.8
(22) Date de dépôt: 22.09.2020
(51) Int. Cl.: G06K 19/077

(54) **PNEUMATIQUE EQUIPÉ D'UN TRANSPONDEUR RADIOFRÉQUENCE**
REIFEN, DER EINEN RADIOFREQUENZ-TRANSPONDER UMFASST
TYRE COMPRISING A RADIOFREQUENCY TRANSPONDER

(30) Priorité: 25.09.2019 FR 1910573
(43) Date de publication de la demande: 03.08.2022
(73) Titulaire: COMPAGNIE GENERALE DES ETABLISSEMENTS MICHELIN, 63000 Clermont-Ferrand (FR)
(72) Inventeur: DESTRAVES, Julien, 63040 CLERMONT-FERRAND Cedex 9 (FR); COUTURIER, Laurent, 63040 CLERMONT-FERRAND Cedex 9 (FR); GUINAULT, Pierre, 63040 CLERMONT-FERRAND Cedex 9 (FR); JOULIN, Emmanuel, 63040 CLERMONT-FERRAND Cedex 9 (FR); FREDON, Sébastien, 63040 CLERMONT-FERRAND Cedex 9 (FR)
(74) Mandataire: M.F.P. Michelin
(86) Numéro de dépôt international: PCT/FR2020/051651
(87) Numéro de publication internationale: WO 2021/058905

(56) Documents cités:
- EP-A1- 0 929 912
- EP-A1- 2 603 887
- EP-B1- 0 929 912
- WO-A1-2018/104620
- WO-A1-2018/104623
- WO-A1-2018/224194
- US-A1- 2013 185 929

## Description

### Domaine de l'invention

La présente invention concerne une enveloppe pneumatique équipée d'un dispositif électronique de radio identification ou transpondeur radiofréquence subissant, en particulier en service lorsqu'elle est montée sur un véhicule terrestre, de fortes sollicitations thermo mécaniques.

### Arrière-plan technologique

Pour le domaine des dispositifs d'identification RFID (acronyme de Radio Frequency Identification), des transpondeurs radiofréquences passifs sont classiquement utilisés pour l'identification, le suivi et la gestion d'objets. Ces dispositifs permettent une gestion automatisée plus fiable et plus rapide.

Ces transpondeurs à identification radiofréquences passifs sont constitués généralement d'au moins une puce électronique et une antenne formée par une boucle magnétique ou une antenne rayonnante que l'on fixe à l'objet à identifier.

La performance de communication du transpondeur radiofréquence s'exprime par la distance maximale de communication du transpondeur radiofréquence avec un lecteur radiofréquence pour un même signal communiqué au ou par le lecteur radiofréquence.

Dans le cas des produits fortement extensibles comme par exemple les pneumatiques, un besoin existe d'identifier le produit tout au long de son existence depuis sa fabrication jusqu'à son retrait du marché et, en particulier, lors de son usage. Ensuite, afin de faciliter cette tâche, notamment en condition d'usage sur véhicule, une performance de communication élevée est requise qui s'exprime par la possibilité d'interroger le transpondeur radiofréquence à longue distance du produit, plusieurs mètres, par l'intermédiaire d'un lecteur radiofréquence. Enfin, on souhaite que le coût de fabrication d'un tel dispositif soit le plus compétitif possible.

On connait dans l'état de la technique, notamment d'après le document WO 2016/193457A1, un transpondeur à identification radiofréquence passif apte à répondre aux besoins des pneumatiques. Ce transpondeur est constitué d'une puce électronique, connectée à un circuit imprimé sur lequel est galvaniquement connectée une première antenne primaire. Cette antenne primaire est couplée électromagnétiquement à un ressort hélicoïdal mono brin constituant une antenne rayonnante dipôle. La communication avec un lecteur externe radiofréquence utilise par exemple les ondes radioélectriques et en particulier la bande UHF, acronyme d'Ultra Hautes Fréquences. En conséquence, les caractéristiques du ressort hélicoïdal sont ajustées à la fréquence de communication choisie. Ainsi la disparition de jonction mécanique entre le circuit imprimé et l'antenne rayonnante améliore la tenue mécanique du transpondeur radiofréquence. Le document WO2018/104620A1 divulgue des implantations de telles étiquettes RFID dans des architectures de pneumatique.

Cependant, un tel transpondeur radiofréquence passif présente des faiblesses dans son usage lorsqu'il est intégré à une enveloppe pneumatique, en particulier lorsque l'armature de carcasse de l'enveloppe pneumatique est métallique. Bien que ce transpondeur radiofréquence soit adapté pour fonctionner à la fréquence de communication du lecteur externe radiofréquence, la communication radiofréquence par l'intermédiaire de l'antenne rayonnante n'est pas optimale en particulier pour des interrogations à longue distance en particulier en raison des renforts métalliques perturbant les ondes radioélectriques. De surcroît, il faut aussi tenir compte de la tenue mécanique de l'antenne rayonnante dans un environnement fortement sollicitant thermomécaniquement. Ainsi, il faut optimiser le compromis de performances entre la tenue mécanique de l'antenne et son efficacité de radiocommunication, comme sa performance radioélectrique et dans un second temps sa performance électromagnétique, afin d'optimiser les performances potentielles d'un tel transpondeur radiofréquence passif. Le document EP0929912 présente des conceptions d'antenne rayonnante hélicoïdales permettant de créer deux fréquences de communication pour des dispositifs actifs de type téléphone portables. Enfin le document WO2018/224194A1 présente un pneumatique équipé de transpondeurs radiofréquences, constitués généralement de brins d'antenne connectés à une puce électronique, localisés dans la zone basse du pneumatique. La présente invention porte sur une enveloppe pneumatique ayant une armature de carcasse métallique, équipée d'un transpondeur radiofréquence passif visant à améliorer le compromis de performances, et en particulier la performance de radiocommunication des transpondeurs radiofréquences passifs employés dans une architecture de pneumatique lors de son usage sur véhicule.

### Description de l'invention

L'invention porte d'abord sur une enveloppe pneumatique de forme toroïdale autour d'un axe de référence équipée d'un transpondeur radiofréquence passif. L'enveloppe pneumatique comporte :
- un bloc sommet, comprenant une armature de sommet présentant une extrémité axiale à chacun de ses bords et une bande de roulement, réuni à chacune de ses extrémités axiales à un bourrelet, présentant une extrémité intérieure, située axialement et radialement intérieurement au bourrelet par rapport à l'axe de référence, par l'intermédiaire d'un flanc,
- Une armature de carcasse, comprenant au moins une couche d'armature de carcasse formée d'éléments de renforcement parallèles entre eux insérés entre deux couches de calandrage en mélange élastomère
- La au moins une couche d'armature de carcasse étant ancrée dans chacun des bourrelets par retournement autour d'une tringle annulaire pour former une partie principale de la au moins une couche d'armature de carcasse, s'étendant d'une tringle à l'autre et située radialement intérieurement par rapport au bloc sommet, et un retournement de la au moins une couche d'armature de carcasse dans chacun des bourrelets,
- Une deuxième couche de mélange élastomère formant la surface extérieure de l'enveloppe pneumatique dans la zone du bourrelet, ladite seconde couche de mélange élastomère étant destinée à venir en contact avec la jante,
- Une troisième couche de mélange élastomère située radialement extérieurement au contact de la deuxième couche de mélange élastomère formant la surface extérieure dudit flanc.
- Le transpondeur radiofréquence passif comprenant une partie électronique et une antenne dipôle rayonnante.
- L'antenne dipôle rayonnante étant constituée d'un ressort hélicoïdal monobrin définissant un pas d'hélice P, un diamètre d'enroulement D, un plan médian et un diamètre de fil définissant des diamètres intérieur et extérieur de l'antenne rayonnante, dont la longueur est adaptée pour communiquer sur une bande de fréquence avec un lecteur à émission radiofréquence définissant un premier axe longitudinal, une zone centrale et deux zones latérales suivant le premier axe longitudinal.
- La partie électronique comprenant une puce électronique et une antenne primaire de type bobine comprenant au moins un tour, et définissant ainsi un second axe longitudinal et un plan médian perpendiculaire au second axe longitudinal.
- L'antenne primaire étant connectée galvaniquement à la puce électronique et couplée électro-magnétiquement à l'antenne dipôle rayonnante, et étant circonscrite dans un cylindre dont l'axe de révolution est parallèle au second axe longitudinal et dont le diamètre est supérieur ou égal au tiers du diamètre intérieur de l'antenne dipôle rayonnante située au droit de l'antenne primaire.
- Le transpondeur radiofréquence passif étant agencé de sorte que les premier et second axes longitudinaux soient parallèles et que le plan médian de l'antenne primaire soit placé dans la zone centrale du ressort hélicoïdal.
L'enveloppe pneumatique est caractérisée en ce que l'antenne dipôle rayonnante comprenant une première zone où l'antenne dipôle rayonnante n'est pas située au droit de la partie électronique, le rapport entre le pas d'hélice P1 et le diamètre d'enroulement D1 pour au moins une boucle du ressort hélicoïdal de la première zone est supérieur à 0,8, en ce que l'antenne dipôle rayonnante est située au droit d'au moins deux éléments de renforcement de la partie principale de la au moins une couche d'armature de carcasse, et en ce que le transpondeur radiofréquence passif se situe axialement extérieurement par rapport à l'extrémité intérieure du bourrelet et radialement entre l'extrémité la plus radialement extérieure de la tringle et l'extrémité axiale de l'armature de sommet, préférentiellement à l'intérieur de l'enveloppe pneumatique.

On entend ici par le terme « élastomère », l'ensemble des élastomères y compris les TPE (acronyme de Thermo Plastiques Elastomères), tels que par exemple les polymères diéniques, c'est-à-dire comprenant des unités diéniques, les silicones, les polyuréthanes et les polyoléfines.

On entend ici par le terme « couplage électromagnétique, », le couplage par rayonnement électromagnétique, c'est-à-dire le transfert d'énergie sans contact physique entre deux systèmes incluant d'une part le couplage inductif et d'autre part le couplage capacitif. L'antenne primaire est alors préférentiellement comprise dans le groupe comprenant : une bobine, une boucle ou un segment de fil ou une combinaison de ces éléments conducteurs.

Ici, on entend par le terme « parallèle » que l'angle formé par les directions axiales de chaque antenne est inférieur ou égal à 30 degrés. Dans ce cas, le couplage électromagnétique entre les deux antennes est optimal, améliorant notablement les performances de communication du transpondeur radiofréquence passif.

Ici, il convient d'abord de définir le plan médian de la bobine et du ressort hélicoïdal. Par définition, c'est un plan fictif séparant l'objet en deux parties égales. Dans notre cas, ce plan médian est perpendiculaire à l'axe de chaque antenne. Enfin, on entend ici par le terme « zone centrale » que la distance relative entre les plans médians est inférieure au dixième de la longueur de l'antenne rayonnante.

Ainsi l'intensité du courant électrique étant maximale au centre de l'antenne rayonnante, le champ magnétique induit par ce courant est aussi maximal au centre de l'antenne rayonnante ; on assure ainsi que le couplage inductif entre les deux antennes est optimal améliorant de ce fait la performance de communication du transpondeur radiofréquence passif.

En imposant les dimensions relatives de l'antenne primaire par rapport aux caractéristiques du ressort hélicoïdal de l'antenne rayonnante, on assure que la distance entre les deux antennes sera inférieure au diamètre de l'antenne primaire dans le cas où l'antenne primaire se situe à l'intérieur de l'antenne rayonnante. Ainsi on optimise le couplage électromagnétique entre les deux antennes et de ce fait la performance de communication du transpondeur radiofréquence en émission et en réception.

De même en dehors de la zone de l'antenne rayonnante qui est située au droit de la partie électronique et donc de l'antenne primaire, un rapport du pas d'hélice sur le diamètre d'enroulement supérieur à 0,8 pour une boucle de l'antenne rayonnante a pour effet d'étirer le ressort hélicoïdal. Ainsi on diminue la longueur utile de fil pour parcourir une distance nominale de l'antenne rayonnante. De ce fait on diminue la résistance de l'antenne rayonnante. Par conséquence, à iso champ électrique, l'intensité du courant électrique circulant dans l'antenne rayonnante est plus importante à la fréquence propre de l'antenne, ce qui permet d'améliorer la performance de communication du transpondeur radiofréquence. De plus, l'étirement du ressort hélicoïdal permet d'améliorer le rendement de l'antenne rayonnante en améliorant le rapport entre la résistance de rayonnement sur la résistance de pertes de celle-ci , ce qui permettra aussi de maximiser le champ électrique rayonné par l'antenne rayonnante à iso courant électrique circulant dans l'antenne rayonnante. Enfin, l'étirement de l'antenne rayonnante permet de diminuer le volume occupé par le ressort hélicoïdal à iso pas de l'antenne rayonnante. Ainsi, dans un environnement dimensionnel contraint comme l'épaisseur d'une enveloppe pneumatique, il est possible d'augmenter l'épaisseur de gomme isolante entourant l'antenne rayonnante dans cette première zone. Cette isolation électrique minimise les pertes et améliore donc la performance de communication du transpondeur radiofréquence aussi bien en émission qu'en réception. Bien entendu, il est idéal que chacune des boucle de la première zone de l'antenne rayonnante soit allongée, ce qui améliore d'autant la performance de communication du transpondeur radiofréquence passif, en particulier pour les transpondeurs à identification, nommés tag RFID.

On entend par le terme « situé au droit de deux éléments de renforcement » que la projection orthogonale de l'élément, ici l'antenne dipôle rayonnante, sur le plan défini par deux éléments de renforcement parallèles de la partie principale de la au moins une couche d'armature de carcasse coupe ces deux éléments de renforcement au moment de l'ébauche à cru de l'enveloppe pneumatique.

Enfin, le fait que la dimension caractéristique de l'antenne dipôle rayonnante définie par le premier axe longitudinal soit située au droit de plusieurs éléments de renforcement de la couche d'armature de carcasse assure un positionnement maitrisé du transpondeur radiofréquence passif dans l'épaisseur de l'enveloppe pneumatique, notamment lors de la fabrication de celle-ci lors des étapes de conformation et de cuisson. En effet, cette configuration réduit le déplacement possible de l'antenne dipôle rayonnante au sein des diverses couches non réticulées, notamment par rapport à la couche d'armature de carcasse, lors de la confection à cru de l'enveloppe pneumatique. La couche principale d'armature de carcasse de l'enveloppe pneumatique étant disposée d'une tringle à l'autre, cela autorise une large zone d'implantation du transpondeur radiofréquence passif dans l'enveloppe pneumatique qui soit opérationnelle. En effet, on maitrise alors la quantité de matière élastomère entourant le transpondeur radiofréquence passif permettant d'accorder la longueur de l'antenne dipôle rayonnante à l'environnement électrique de l'antenne dipôle rayonnante au sein du pneumatique de façon fiable et robuste.

Enfin, le transpondeur radiofréquence se situe dans la zone du bourrelet et du flanc de l'enveloppe pneumatique, notamment entre la tringle et l'armature de sommet du bloc sommet, afin de faciliter la communication de celui-ci par un lecteur radiofréquence externe notamment en service sur véhicule. En effet, les éléments métalliques de la carrosserie du véhicule, comme l'aile, ou la roue généralement métalliques gênent la propagation des ondes radioélectriques vers ou depuis la transpondeur radiofréquence passif situé avec l'enveloppe pneumatique, notamment dans la gamme de fréquences des UHF L'implantation du transpondeur radiofréquence passif au niveau du flanc et du bourrelet, radialement à l'extérieur de la tringle, de l'enveloppe pneumatique facilite l'interrogation et la lecture du transpondeur radiofréquence passif par un lecteur radiofréquence externe à grande distance dans de nombreuses positions du lecteur radiofréquence externe lorsque l'enveloppe pneumatique est en service sur véhicule. La communication du transpondeur radiofréquence passif est alors robuste et fiable. Bien que non indispensable pour la communication radiofréquence, le transpondeur radiofréquence passif se situe à l'intérieur de l'enveloppe pneumatique. Il est alors incorporé dans celle-ci au cours de la fabrication de l'enveloppe pneumatique, ce qui sécurise les informations contenues en lecture seule dans la mémoire de la puce électronique du transpondeur radiofréquence passif comme, par exemple, l'identification de l'enveloppe pneumatique. L'alternative consiste à fixer, par les techniques connues de l'état de l'art, un patch en mélange élastomère contenant ledit transpondeur radiofréquence passif sur les surfaces externes de l'enveloppe pneumatique comme par exemple au niveau de la couche de gomme intérieure ou du flanc .Cette opération peut avoir lieu à tout moment au cours de la vie de l'enveloppe pneumatique, ce qui rend moins fiable les informations de l'enveloppe pneumatique contenues dans la mémoire de la puce électronique du transpondeur radiofréquence passif.

Optionnellement, l'antenne dipôle rayonnante comprenant une deuxième zone où l'antenne dipôle rayonnante est située au droit de la partie électronique, le rapport entre le pas d'hélice P2 et le diamètre d'enroulement D2 pour chaque boucle de la deuxième zone est inférieur ou égal à 0,8.

En effet, dans cette deuxième zone de l'antenne dipôle rayonnante et tout particulièrement dans la zone se situant au droit de l'antenne primaire, la performance attendue de l'antenne dipôle rayonnante est le couplage électromagnétique et, en particulier, inductif avec l'antenne primaire de la partie électronique. De ce fait, un premier levier pour améliorer ce couplage est d'augmenter l'inductance de l'antenne rayonnante dans cette deuxième zone, ce qui revient à contracter le ressort hélicoïdal. De plus, le fait de contracter l'antenne dipôle rayonnante dans cette deuxième zone favorise aussi le transfert d'énergie entre l'antenne primaire et l'antenne dipôle rayonnante par l'augmentation de la surface d'échange proposée par l'antenne dipôle rayonnante à iso longueur de l'antenne primaire située en vis-à-vis de l'antenne dipôle rayonnante. Cette amélioration du transfert d'énergie entraine une meilleure performance de communication du transpondeur radiofréquence passif.

L'invention comprend aussi que le rapport entre le pas d'hélice et le diamètre d'enroulement de chacune des boucles du ressort hélicoïdal dans la première zone de l'antenne rayonnante est inférieure à 3, préférentiellement inférieure à 2.

Bien qu'il soit intéressant d'améliorer la performance radioélectrique de l'antenne rayonnante, il ne faut pas non plus négliger les autres fonctions qu'elle doit remplir. En particulier, le ressort hélicoïdal est une structure extensible adaptée pour supporter des sollicitations tridimensionnelles auxquelles le transpondeur radiofréquence dans une enveloppe pneumatique devra faire face depuis la confection de l'enveloppe pneumatique jusqu'à l'usage de l'enveloppe pneumatique en tant qu'objet de mobilité sur véhicule. De ce fait, il convient de limiter l'étirement de l'antenne rayonnante dans cette première zone afin de conserver une souplesse suffisante à l'antenne rayonnante dans son ensemble et ainsi s'assurer de l'intégrité physique du transpondeur radiofréquence passif.

De préférence, l'antenne primaire étant connectée aux bornes d'une carte électronique comprenant la puce électronique, l'impédance électrique de l'antenne primaire est adaptée à l'impédance électrique de la carte électronique du transpondeur radiofréquence.

On entend par le terme « impédance électrique de la carte électronique », l'impédance électrique aux bornes de l'antenne primaire, ce qui représente l'impédance électrique de la carte électronique comprenant au moins une puce électronique et un circuit imprimé sur lequel la puce électronique est connectée.

En réalisant l'adaptation d'impédance de l'antenne primaire à celle de la carte électronique, on optimise le transpondeur radiofréquence à la fréquence de communication en améliorant le gain et en ayant un facteur de forme plus sélectif, une bande passante plus étroite de la carte électronique. Ainsi les performances de communication du transpondeur radiofréquence sont améliorées pour une même quantité d'énergie transmise au transpondeur radiofréquence. Cela se traduit en particulier par une augmentation de la distance de lecture du transpondeur radiofréquence à iso puissance radioélectrique émise. L'adaptation d'impédance de l'antenne primaire est obtenue par l'ajustement d'au moins l'une des caractéristiques géométriques de l'antenne primaire comme par exemple, le diamètre du fil, le matériau de ce fil et la longueur du fil.

L'adaptation d'impédance de l'antenne primaire peut être aussi obtenue par l'ajout d'un circuit de transformation d'impédance constitué de composants électroniques additionnels entre l'antenne primaire et le circuit électronique comme, par exemple, des filtres à base d'inductance et de capacités et des lignes de transmission.

L'adaptation d'impédance de l'antenne primaire peut aussi être obtenue par la combinaison des caractéristiques de l'antenne primaire et des caractéristiques d'un circuit de transformation d'impédance.

Selon un mode de réalisation particulier, la puce électronique et au moins une partie de l'antenne primaire sont noyées dans une masse rigide et isolante électriquement tel que, par exemple, de la résine de type époxy haute température. L'ensemble constitue la partie électronique du transpondeur radiofréquence.

Ainsi, on rigidifie la partie électronique comprenant au moins une partie de l'antenne primaire et la puce électronique connectée au circuit imprimé rendant plus fiables les connexions mécaniques entre ses composants vis-à-vis des sollicitations thermo mécaniques subies par l'enveloppe pneumatique aussi bien lors de sa connexion que lors de son usage.

Cela permet aussi l'industrialisation de la partie électronique du transpondeur radiofréquence indépendamment de l'antenne rayonnante ou de l'enveloppe pneumatique. Notamment une miniaturisation du composant électronique comprenant l'antenne primaire et la puce électronique peut être envisagée en utilisant par exemple une micro bobine à spires comme antenne primaire.

Selon un autre mode de réalisation, la partie de l'antenne primaire non noyée dans la masse rigide est revêtue d'un matériau isolant électriquement.

Ainsi, si l'antenne primaire n'est pas entièrement contenue dans la masse rigide et isolante électriquement de la partie électronique, il est utile de l'isoler par l'intermédiaire d'un revêtement dans un matériau isolant électriquement comme ceux employés pour une gaine d'isolation de câble électrique.

Selon un mode de réalisation spécifique, l'enveloppe pneumatique comprend une quatrième couche de mélange élastomère située axialement extérieurement à la partie principale d'au moins une couche d'armature de carcasse et axialement intérieurement aux deuxième et/ou troisième couches de mélange élastomère.

Ainsi, cette configuration d'enveloppe pneumatique permet d'avoir des compromis de performance du bourrelet et du flanc différentiant et le transpondeur radiofréquence passif peut être inséré au contact de cette quatrième couche de mélange élastomère. Cette quatrième couche de mélange élastomère peut, par exemple, être une gomme de remplissage tringle située entre la partie principale et le retournement de la couche d'aramture de carcasse radialement extérieurement à la tringle . Elle peut aussi être une gomme de remplissage du bourrelet et/ou du flanc entre cette gomme de remplissage tringle et/ou le retournement de la couche d'armature de carcasse et les deuxième et/ou troisième couches de mélange élastomère de l'enveloppe pneumatique.

Le transpondeur radiofréquence passif peut alors être en contact avec cette quatrième couche de mélange élastomère.

Selon un autre mode de réalisation spécifique, l'enveloppe pneumatique comprenant une couche étanche à l'air en matériau élastomère, c'est-à-dire fortement imperméable à l'air permettant un roulage de l'enveloppe pneumatique préssurissée pendant au moins un mois sans perte de pression de gonflage en l'absence d'incident sur l'envelope pneumatique et dans les mêmes conditions d'usage, située le plus intérieurement à l'enveloppe pneumatique, l'enveloppe pneumatique comprend une cinquième couche de mélange élastomère située intérieurement à la partie principale de la au moins une couche d'armature de carcasse.

Cette configuration d'enveloppe pneumatique, avec sa cinquième couche de mélange élastomère, permet en particulier des roulages en mode étendue grâce à la cinquième couche de mélange élastomère située au niveau du flanc de l'enveloppe pneumatique. En cas de perte de pression de gonflage de l'enveloppe pneumatique, la cinquième couche en mélange élastomère permet de transmettre des efforts entre le bourrelet et le bloc sommet sans faire flamber le flanc de l'enveloppe pneumatique.

Le transpondeur radiofréquence passif peut alors être en contact avec cette cinquième couche de mélange élastomère.

Selon un mode de réalisation particulier, l'enveloppe pneumatique comprend une couche d'armature de renfort formé d'éléments de renforcement insérés entre deux couches de gommes.

Ce sont des enveloppes particulières qui, suivant le type d'usage ou de sollicitations en service, nécessitent des armatures de renfort localisées. Par exemple, dans le bourrelet, cette couche d'armature de renfort permet de prévenir des frottements entre la roue et l'enveloppe pneumatique. Cette couche d'armature de renfort peut aussi être localisée dans certaine zone, en particulier les extrémités axiales du bloc sommet pour contraindre la géométrie du bloc sommet et de l'enveloppe pneumatique sous fortes sollicitations thermo mécaniques. Cette couche d'armature de renfort présente généralement au moins une extrémité libre. Le transpondeur radiofréquence passif peut alors être en contact ou à proximité de l'extrémité libre de cette couche d'armature de renfort en mélange élastomère.

Selon un mode de réalisation spécifique, le transpondeur radiofréquence passif est en partie enrobée dans une masse de mélange élastomère isolante électriquement.

On entend ici par « isolant électriquement » que la conductivité électrique du mélange élastomère est au minimum en deçà du seuil de percolation des charges conductrices du mélange.

Selon un dernier mode de réalisation spécifique, la constante diélectrique relative de la masse d'enrobage est inférieure à 10.

Cette valeur de permittivité diélectrique relative des mélanges élastomères constituant la masse d'enrobage permet de garantir une stabilité du milieu dans lequel se trouve le transpondeur radiofréquence passif permettant de rendre robuste l'objet de l'invention. Ainsi, la masse d'enrobage garantit un environnement constants aux ondes radioélectriques, ce qui fige de manière robuste la dimension de l'antenne dipôle rayonnante pour un fonctionnement à la fréquence de communication ciblée.

Selon un autre mode de réalisation spécifique, le module d'élasticité en extension de la masse d'enrobage est inférieur au module d'élasticité en extension d'au moins un mélange élastomère adjacent à ladite masse d'enrobage.

Ainsi, on constitue un ensemble qui facilite la mise en place du transpondeur radiofréquence passif dans l'enveloppe pneumatique à cru en limitant la singularité mécanique que constitue le transpondeur radiofréquence passif au sein de l'enveloppe pneumatique. Une couche de gomme de liaison usuelle pourra être employée, si nécessaire, pour solidariser cet ensemble à l'enveloppe pneumatique.

De plus, les caractéristiques de rigidité et de conductivité électrique du mélange élastomère assurent une insertion mécanique et une isolation électrique de qualité du transpondeur radiofréquence passif au sein de l'enveloppe pneumatique. Ainsi le fonctionnement du transpondeur radiofréquence n'est pas perturbé par l'enveloppe pneumatique.

Selon un premier mode de réalisation préférentiel, le transpondeur radiofréquence passif est situé à une interface définie par une surface d'une couche de mélange élastomère de l'enveloppe pneumatique.

C'est un mode de réalisation qui facilite la mise en place du transpondeur radiofréquence passif dans l'architecture de l'enveloppe pneumatique. La pose du transpondeur radiofréquence passif intervenant directement au niveau du moyen de confection de l'ébauche à cru en posant le dit transpondeur radiofréquence passif sur la surface externe d'une couche en mélange élastomère. Cette couche en mélange élastomère peut aussi être une couche de calandrage. Puis le transpondeur radiofréquence passif sera recouvert par une seconde couche en mélange élastomère. Ainsi, le transpondeur radiofréquence passif est alors entièrement enrobé par les composants de l'enveloppe pneumatique. Il est donc noyé au sein de l'enveloppe pneumatique, ce qui assure son infalsifiabilité lorsque la mémoire de la puce électronique est bloquée en écriture.

Préférentiellement, l'interface étant définie par une autre couche de mélange élastomère ou une couche d'armature, le transpondeur radiofréquence passif est situé à une distance d'au moins 5 millimètres des extrémités des couches au niveau de l'interface.

Le transpondeur radiofréquence passif se présente comme un corps étranger dans l'architecture du pneumatique, ce qui constitue une singularité mécanique. Les extrémités des couches au niveau de l'interface constituent aussi des singularités mécaniques. Afin de prévenir l'endurance de l'enveloppe pneumatique, il est préférentiel d'éloigner les deux singularités l'une de l'autre d'une certaine distance. Plus cette distance est grande, plus elle est favorable, la distance minimale de l'influence d'une singularité étant bien entendu proportionnelle à la dimension de cette singularité. La singularité constituée par l'extrémité d'une couche est d'autant plus sensible que la rigidité de la couche est élevée par rapport à la rigidité des couches adjacentes comme, par exemple, une couche d'armature de renfort ou une couche d'armature de carcasse. Dans le cas où les renforts sont métalliques ou textile avec une rigidité élevée comme dans le cas de l'aramide, par exemple, il convient d'éloigner les deux singularités d'au moins 10 millimètres l'une de l'autre.

Selon un second mode de réalisation préférentiel, le transpondeur radiofréquence passif est situé à l'intérieur d'une couche de mélange élastomère de l'enveloppe pneumatique.

Ce second mode a l'avantage de laisser le choix de la position exacte du transpondeur radiofréquence passif suivant l'épaisseur de l'enveloppe pneumatique, contrairement au premier mode de réalisation préférentiel qui impose la position par l'interface entre les couches en mélange élastomère. Ainsi, il est aussi possible d'enrober le transpondeur radiofréquence passif dans une masse homogène de mélange élastomère d'un point de vue isolation électrique et rigidité, ce qui facilite le bon fonctionnement radiofréquence et mécanique du transpondeur radiofréquence passif. Cela permet aussi de préparer l'intégration du transpondeur radiofréquence dans la couche en mélange élastomère en dehors du moyen de confection de l'enveloppe pneumatique, ce qui est plus productif. Ainsi, ce second mode de réalisation préférentiel offre un plus large choix d'implantation du transpondeur radiofréquence passif au sein de l'enveloppe pneumatique.

Avantageusement, le premier axe longitudinale de l'antenne dipôle rayonnante du transpondeur radiofréquence passif est perpendiculaire à l'épaisseur de la couche de mélange élastomère.

Les couches de mélange élastomère sont généralement des couches épaisses qui se superposent partiellement les unes aux les autres pour confectionner une enveloppe pneumatique. Afin de maitriser au mieux le positionnement du transpondeur radiofréquence passif au sein de l'enveloppe pneumatique, il est préférable d'orienter la dimension principale du transpondeur radiofréquence passif, soit le premier axe longitudinal, de façon perpendiculaire à l'épaisseur de la couche de mélange élastomère. Cela prévient des risques où le transpondeur radiofréquence, incliné par rapport à la surface du mélange élastomère, viendrait lors de la fabrication du pneumatique à traverser la surface externe dela couche de mélange élastomère pour venir en traverser une autre. Ceci serait potentiellement nuisible à l'endurance de l'enveloppe pneumatique.

Très avantageusement, le transpondeur radiofréquence passif est situé à une distance d'au moins 0,3 millimètre des surfaces de la couche de mélange élastomère.

On entend ici par le terme « distance d'au moins 0,3 millimètre » que tout point matériel externe du premier objet, ici le transpondeur radiofréquence passif équipé potentiellemet de sa masse d'enrobage, est situé à une distance supérieure ou égale à 0,3 millimètres de tout point matériel du second objet, ici les surfaces de la couche de mélange élastomère. En particulier, cette distance de 0,3 millimètres doit être mesurée à l'état cuit.

Ainsi, on prévient le risque de tout déplacement potentiel sous contraintes thermomécaniques du transpondeur radiofréquence passif au sein de la couche de mélange élastomère ou des dispersions de pose du transpondeur radiofréquence passif au sein de la couche de mélange élastomère lors de la phase de fabrication de l'enveloppe pneumatique. Ce positionnement ne provoquera pas la sortie du transpondeur radiofréquence passif de la couche de mélange élastomère. De ce fait, on garantit une isolation électrique et mécanique contrôlée du transpondeur radiofréquence passif au sein de la couche en mélange élastomère, ce qui garantit une endurance de l'enveloppe pneumatique et du transpondeur radiofréquence tout en garantissant un bon fonctionnement radiofréquence.

Selon un mode de réalisation spécifique, la communication radioélectrique avec le lecteur radiofréquence s'effectue dans la bande des UHF et tout spécifiquement dans la gamme comprise entre 860 et 960Mhz.

En effet, dans cette bande de fréquences, la longueur de l'antenne rayonnante est inversement proportionnelle à la fréquence de communication. Et au-delà de cette bande de fréquences, la communication radioélectrique est fortement perturbée, voire impossible dans les matériaux élastomères standards. De ce fait, cela constitue le meilleur compromis entre la taille du transpondeur radiofréquence et sa communication radioélectrique notamment en champ lointain permettant d'avoir des distances de communication satisfaisantes dans le domaine du pneumatique.

Selon un autre mode de réalisation particulier, la longueur L0 de l'antenne rayonnante est comprise entre 30 et 50 millimètres.

En effet, dans la gamme de fréquences entre 860 et 960 MHz et selon les permittivités diélectriques relatives des mélanges élastomères entourant le transpondeur radiofréquence, la longueur totale du ressort hélicoïdal qui est adaptée à la demi longueur d'onde des ondes radioélectrique émises ou reçues par le transpondeur radiofréquence est située dans la fourchette entre 30 et 50 millimètres, de préférence entre 35 et 45 millimètres. Afin d'optimiser le fonctionnement de l'antenne rayonnante à ces longueurs d'ondes, il convient de parfaitement adapter la longueur de l'antenne rayonnante à la longueur d'onde.

Avantageusement, le diamètre d'enroulement du ressort hélicoïdal dans la première zone de l'antenne rayonnante est compris entre 0,6 et 2,0 millimètres, préférentiellement entre 0,6 et 1,6 millimètres.

Cela permet de limiter le volume occupé par l'antenne rayonnante est donc d'augmenter l'épaisseur de mélange élastomère isolant électriquement autour du transpondeur radiofréquence. Bien entendu ce diamètre du ressort hélicoïdal dans la première zone de l'antenne rayonnante peut être constant, variable, continûment variable ou variable par morceaux. Il est préférable du point de vue de l'intégrité mécanique de l'antenne rayonnante que le diamètre soit constant ou continûment variable.

Selon un mode de réalisation privilégié, le pas d'hélice d'au moins une boucle de l'antenne rayonnante dans la première zone de l'antenne rayonnante est compris entre 1 et 4 millimètres et, de préférence, entre 1,3 et 2 millimètres.

Cela permet d'une part d'assurer que le rapport du pas d'hélice sur le diamètre d'enroulement du ressort, ou au moins une boucle, dans la première zone de l'antenne rayonnante, est inférieur à 3 garantissant un minimum d'élongation du ressort hélicoïdal. De plus, ce pas peut aussi être constant ou variable sur toute la première zone de l'antenne rayonnante. Bien entendu, il est préférable que le pas soit continûment variable ou avec des transitions de faible variation pour éviter des points singuliers dans l'antenne rayonnante qui représenteraient des faiblesses mécaniques de l'antenne rayonnante.

Selon un mode de réalisation avantageux, le diamètre du fil de l'antenne rayonnante est comprise entre 0,05 et 0,25 millimètres, idéalement entre 0,12 et 0,23 millimètres.

Dans cette gamme de fil, on garantit d'une part que la résistance des pertes sera faible, améliorant ainsi les performances radioélectriques de l'antenne rayonnante. De plus, limiter le diamètre du fil permet d'éloigner l'antenne rayonnante des conducteurs électriques en augmentant l'épaisseur des mélanges élastomères isolants électriquement. Cependant, il est nécessaire de conserver une certaine résistance mécanique au fil pour supporter les contraintes thermomécaniques qu'il subira dans un environnement fortement sollicitant comme l'enveloppe pneumatique, sans optimiser la limite à rupture du matériau de ces fils, généralement en acier doux. Cela permet d'assurer un compromis technico-économique satisfaisant de l'antenne rayonnante.

L'invention est caractérisée ence que le premier pas P1 de l'antenne dipôle rayonnante correspondant au pas d'hélice de l'antenne dipôle rayonnante dans la première zone est supérieur au deuxième pas P2 de l'antenne dipôle rayonnante correspondant au pas d'hélice de l'antenne dipôle rayonnante dans la deuxième zone où l'antenne dipôle rayonnante est située au droit de la partie électronique.

En imposant que le pas d'hélice P2 de l'antenne dipôle rayonnante dans une deuxième zone où l'antenne dipôle rayonnante est située au droit de la partie électronique est inférieur au pas P1 de l'antenne dipôle rayonnante en dehors de cette zone, on privilégie les aptitudes électromagnétiques de l'antenne dipôle rayonnante dans cette zone au détriment de son efficacité rayonnante qui sont mises en valeur dans la première zone de l'antenne dipôle rayonnante. Ainsi, le resserrement du pas d'hélice de l'antenne dipôle rayonnante améliore l'inductance de l'antenne dans cette zone. Ceci est un bras de levier essentiel pour augmenter le champ magnétique généré par l'antenne dipôle rayonnante à iso courant électrique circulant dans l'antenne. Et cette amélioration de l'inductance de l'antenne dipôle rayonnante est obtenue sans modifier nécessairement le diamètre d'enroulement de l'antenne rayonnante. De plus, le resserrement du pas de l'antenne dipôle rayonnante au droit de l'antenne primaire de la partie électronique assure une plus grande surface d'échange entre les deux antennes à iso longueur de l'antenne primaire améliorant aussi le couplage électromagnétique entre les deux antennes. Et de ce fait la performance de communication du transpondeur radiofréquence s'en trouve améliorée. Enfin, le resserrement du pas de l'antenne dipôle rayonnante permet de minimiser et de mieux maitriser les tolérances de fabrication de l'antenne dipôle rayonnante dans cette deuxième zone notamment au niveau de la détermination du diamètre d'enroulement de l'antenne dipôle rayonnante. Ainsi, le taux de rebut des antennes dipôles rayonnantes s'en trouve réduit puisque la maitrise de ce diamètre conditionne le positionnement de la partie électronique par rapport à l'antenne dipôle rayonnante.

Très avantageusement, la partie électronique étant placée à l'intérieur de l'antenne rayonnante, le premier diamètre intérieur D1' de l'antenne dipôle rayonnante dans la première zone est inférieur au deuxième diamètre intérieur D2' de l'antenne dipôle rayonnante dans une deuxième zone et la partie électronique est circonscrite dans un cylindre dont l'axe de révolution est parallèle au premier axe longitudinal et dont le diamètre est supérieur ou égal au premier diamètre intérieur D1' de l'antenne dipôle rayonnante

En garantissant que le cylindre circonscrit à la partie électronique a un axe de révolution parallèle au premier axe longitudinale et un diamètre supérieur ou égal au premier diamètre intérieur de l'antenne dipôle rayonnante, la première zone de l'antenne rayonnante constitue donc une butée au déplacement axial de la partie électronique. Le fait que cette première zone se situe de part et d'autre de la zone de l'antenne dipôle rayonnante située au droit de la partie électronique en raison du positionnement centré de la partie électronique par rapport à l'antenne dipôle rayonnante assure de disposer alors de deux butées mécaniques situées axialement extérieurement à la partie électronique limitant tout mouvement axial de la partie électronique du transpondeur radiofréquence. De plus, le diamètre du cylindre circonscrit de la partie électronique étant situé à l'intérieur de l'antenne rayonnante au niveau de la deuxième zone, ce diamètre est nécessairement inférieur au deuxième diamètre intérieur de l'antenne rayonnante Ainsi, le déplacement radial de la partie électronique est borné par le deuxième diamètre intérieur de l'antenne dipôle rayonnante. En conclusion, le mouvement de la partie électronique est limité, ce qui permet d'assurer la performance de communication du transpondeur radiofréquence tout en assurant une intégrité physique de la partie électronique et de l'antenne dipôle rayonnante du transpondeur radiofréquence passif. Enfin, l'endurance de l'enveloppe pneumatique accueillant ce transpondeur radiofréquence n'est pas non plus impactée par ce choix de conception. Et la manipulation des transpondeurs radiofréquences pour la mise en place au sein de la structure de l'enveloppe pneumatique s'en trouve facilitée sans avoir besoin de précautions supplémentaires.

### Description brève des dessins

L'invention sera mieux comprise au moyen de la description détaillée qui suit. Ces applications sont données uniquement à titre d'exemple et faites en se référant aux figures annexées sur lesquelles les mêmes numéros de référence désignent partout des parties identiques, et dans lesquelles :
- La Fig 1 présente une vue en perspective d'un transpondeur radiofréquence de l'état de la technique ;
- La Fig 2 présente une vue en perspective d'un transpondeur radiofréquence faisant partie de l'invention;
- Les Fig 3a et Fig 3b sont des illustrations de la longueur du fil de l'antenne rayonnante selon le rapport entre le pas d'hélice et le diamètre d'enroulement du ressort hélicoïdal pour une même longueur élémentaire de l'antenne dipôle rayonnante selon que l'on travaille à pas constant ou diamètre d'enroulement constant ;
- La Fig 4 est un exemple de transpondeur radiofréquence faisant partie de l'invention présentant certaines particularités ;
- La Fig 5 est une vue éclatée d'un patch d'identification faisant partie de l'invention ;
- La Fig 6 présente un graphe de la puissance électrique transmise à deux transpondeurs radiofréquences passifs incorporés dans une enveloppe pneumatique selon l'invention en fonction de la bande de fréquences d'observation ;
- La Fig 7 est une vue en coupe méridienne d'une enveloppe pneumatiquede l'état de la technique ;
- La Fig 8 est une vue en coupe méridienne du bourrelet et du flanc d'une enveloppe pneumatique selon l'invention lorsque le transpondeur radiofréquence passif est localisé au niveau de la zone extérieure de l'enveloppe pneumatique ;
- La Fig 9 est une vue en coupe méridienne du bourrelet et du flanc d'une enveloppe pneumatique selon l'invention lorsque le transpondeur radiofréquence passif est localisé au niveau de la zone intérieure de l'enveloppe pneumatique ;
- La Fig 10 est une vue en coupe méridienne d'une enveloppe pneumatique comprenant deux couches d'armature de caracasse ;
- La Fig 11 est une vue en coupe méridienne d'une enveloppe pneumatique comprenant un insert de flanc pour le roulage en mode étendu équipée d'un transpondeur radiofréquence passif ; et
- La Fig 12 est une vue en coupe méridienner du bourrelet et d'un flanc d'une eneveloppe pneumatique selon l'invention lorsque le transpondeur radiofréquence passif est localisé dans la zone intérieure de l'enveloppe pneumatique.

### Description détaillée de modes de réalisation

Dans ce qui suit, les termes « pneumatique » et « bandage pneumatique » sont employés de façon équivalente et concernent tout type de bandage avec ou sans gaz de gonflage (en anglais « tire », « pneumatic tire », « non-pneumatic tire »)

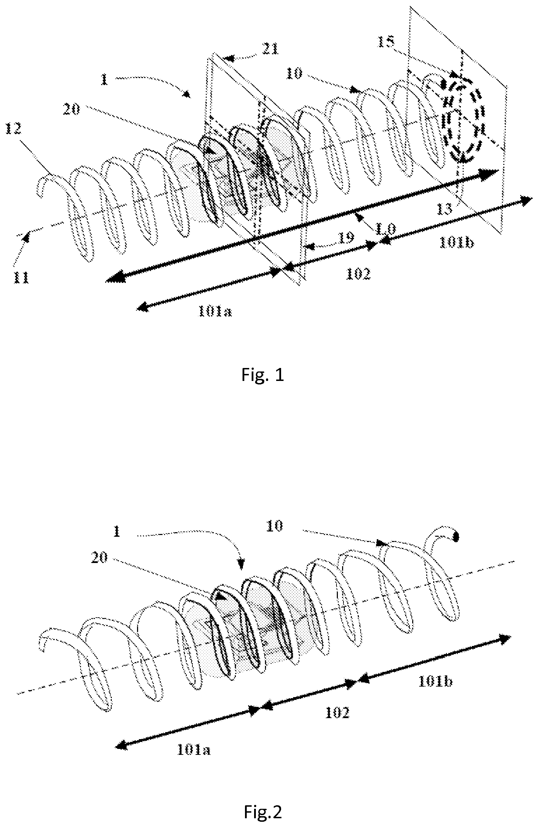

La Fig 1 présente un transpondeur radiofréquence 1 de l'état de la technique dans une configuration où la partie électronique 20 est située à l'intérieur de l'antenne rayonnante 10. L'antenne rayonnante 10 est constituée d'un fil en acier 12 qui a été déformé plastiquement afin de former un ressort hélicoïdal présentant un axe de révolution 11. Le ressort hélicoïdal est défini tout d'abord par un diamètre d'enroulement du fil revêtu et un pas d'hélice. Ces deux paramètres géométriques du ressort hélicoïdal sont ici constants. Ainsi, on détermine précisément des diamètres intérieurs 13 et extérieur 15 du ressort hélicoïdal en prenant en compte le diamètre du fil. La longueur du ressort L0 correspond ici à la demi-longueur d'onde du signal de transmission radiofréquence du transpondeur 1 dans une masse de mélange élastomère. Ainsi on peut définir un plan médian 19 au ressort hélicoïdal, perpendiculaire à l'axe de révolution 11, séparant l'antenne rayonnante 10 en deux parties égales. La forme géométrique de la partie électronique 20 est circonscrite dans un cylindre dont le diamètre est inférieur ou égal au diamètre intérieur 13 du ressort hélicoïdal. L'enfilement de la partie électronique 20 dans l'antenne rayonnante 10 s'en trouve facilité. Le plan médian 21 de l'antenne primaire se trouve sensiblement superposé au plan médian 19 de l'antenne rayonnante 10. Enfin l'axe de l'antenne primaire est sensiblement parallèle à l'axe de révolution 11 de l'antenne rayonnante 10. On peut diviser l'antenne rayonnante en deux zones distinctes : une première zone 101 de l'antenne rayonnante 10 où le ressort hélicoïdal n'est pas situé au droit de la partie électronique 20 et une deuxième zone 102 situé au droit de la partie électronique 20. La première zone 101 de l'antenne rayonnante 10 comprend deux parties 101a et 101b de longueurs sensiblement équivalentes encadrant axialement la seconde zone 102 de l'antenne rayonnante 10.

La Fig 2 est un transpondeur radiofréquence 1 selon l'invention qui a comme caractéristique distinctive par rapport au transpondeur radiofréquence de l'état de la technique que le rapport du pas d'hélice sur le diamètre d'enroulement d'au moins une boucle de l'antenne rayonnante de la première zone est supérieur à 0,8. Dans notre cas, toutes les boucles de chacune des zones 101a et 101b ont vu leur rapport évolué de manière équivalente. Ceci est obtenue par une diminution du nombre total de boucles pour chacune des sous-zones 101a et 101b. Dans ce cas particulier, le diamètre d'enroulement du fil de l'antenne rayonnante 10 est conservé. Cependant, il aurait été possible aussi de modifier le rapport du pas d'hélice sur le diamètre d'enroulement de chaque boucle de la première zone 101 en augmentant le diamètre d'enroulement du fil d'acier de l'antenne rayonnante 10 dans la première zone 101 de cette antenne. Dans notre cas, le pas d'hélice de l'antenne rayonnante 10 dans la deuxième zone 102 de l'antenne rayonnante 10 n'a pas été modifié. De ce fait, le rapport entre le pas d'hélice et le diamètre d'enroulement de la deuxième zone 102 de l'antenne rayonnante 10 est inférieur à 0,8.

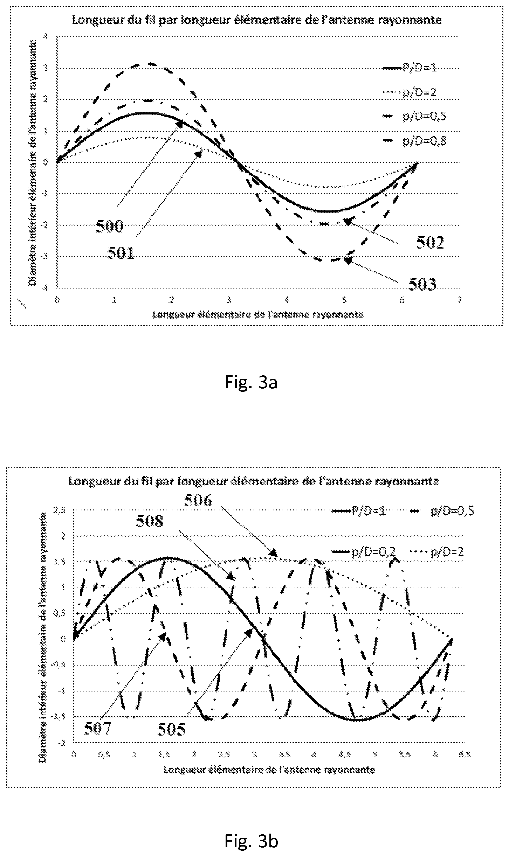

Les Fig 3a et Fig 3b sont des illustrations de l'importance du rapport du pas d'hélice sur le diamètre d'enroulement pour une boucle du ressort hélicoïdal vis-à-vis des propriétés radioélectriques et électromagnétiques de l'antenne rayonnante.

La Fig 3a est une illustration des variations du rapport du pas d'hélice sur le diamètre d'enroulement d'une boucle lorsque le pas d'hélice de la boucle est constant ainsi que le diamètre de fil constituant la boucle. Pour une longueur élémentaire de l'antenne rayonnante de longueur égale à la zone occupée par une boucle complète pour un rapport égal à 1, la distance curviligne de cette boucle est égale à 2 *PI *PI unités élémentaires. La courbe en trait continu 500 correspond à cette boucle. En effet, le rayon de cette boucle vaut nécessairement PI unités élémentaires. Si on prend désormais la courbe 501 en pointillés correspondant à un rapport égal à 2, comme le pas d'hélice est constant, nécessairement le diamètre d'enroulement de cette boucle est deux fois plus petit que le diamètre d'enroulement de la boucle précédente, soit PI unités élémentaires. Alors, la distance curviligne de cette boucle illustrée par les pointillés 501 vaut PI*PI unités élémentaires. De ce fait la longueur curviligne d'une première boucle, présentant un rapport du pas d'hélice sur le diamètre d'enroulement plus grand qu'une deuxième boucle, est moins élevée que la longueur curviligne de cette deuxième boucle. Les courbes 502 constituée de tirets et 503 constituée de tirets en alternance avec un pointillé illustrent respectivement des rapports de 0,8 et de 0,5. Les longueurs curvilignes de ces deux boucles sont respectivement égales à 2,5*PI*PI unités élémentaires et 4*PI*PI unités élémentaires.

La Fig 3b est une illustration des variations du rapport du pas d'hélice sur le diamètre d'enroulement d'une boucle lorsque le diamètre de la boucle est constant ainsi que le diamètre de fil constituant le boucle. Pour une longueur élémentaire de l'antenne rayonnante de longueur égale à la zone occupée par une boucle complète pour un rapport égal à 1, la distance curviligne de cette boucle est égale à 2 *PI *PI unités élémentaires. La courbe en trait continu 505 correspond à cette boucle. En effet, le rayon de cette boucle vaut nécessairement PI unités élémentaires. Si on prend désormais la courbe 506 correspondant à un rapport égal à 2,. comme le diamètre d'enroulement est constant, nécessairement le pas d'hélice de cette boucle est deux fois plus grand que le pas d'hélice de la boucle précédente, soit 4*PI unités élémentaires. Mais si on se limite à la longueur élémentaire de 2*PI unités élémentaires, la distance curviligne de cette boucle illustrée par les pointillés vaut PI*PI unités élémentaires. De la même façon pour les courbes 507 et 508 correspondant respectivement à des rapports de 0,5 et 0,2, soit respectivement un doublement et un quintuplement du nombre de boucles, la distance curviligne de la courbe 507 illustrée en trait pointillé vaut 4*PI*PI unités élémentaires. Et la distance curviligne de la courbe 508 illustrée en trait pointillé en alternance avec deux pointillés vaut 10*PI*PI unités élémentaires.

Bien entendu, au lieu de modifier seulement le pas d'hélice ou le diamètre d'enroulement de chaque boucle, il est possible de modifier les deux paramètres simultanément. Seul le rapport obtenu par ces deux modifications aura un impact sur la performance de communication de l'antenne rayonnante.

En effet, la résistance d'un fil conducteur est proportionnelle à la longueur curviligne du fil. Plus le rapport du pas d'hélice sur le diamètre d'enroulement de la boucle est élevé, plus la longueur curviligne du fil est courte. De ce fait, moins la résistance électrique de la boucle est élevée. En conclusion, on améliore les propriétés radioélectriques des boucles de l'antenne rayonnante en minimisant cette résistance électrique. En minimisant la résistance électrique de l'antenne rayonnante dans la première zone de l'antenne rayonnante, on améliore l'efficacité de rayonnement de l'antenne aussi bien en émission qu'en réception qui est majoritairement constituée par cette première zone. De plus, minimiser la résistance électrique de l'antenne assure de générer un courant électrique maximum à iso différence de potentiels électriques. De ce fait, les performances radioélectriques et donc de communication du transpondeur radiofréquence s'en trouvent améliorées.

Dans la deuxième zone de l'antenne rayonnante, l'efficacité de rayonnement de cette deuxième zone plus petite que la première zonen'est pas essentielle. En effet, cette deuxième zone a pour fonction principale d'assurer un couplage électromagnétique avec l'antenne primaire de la partie électronique. Ce couplage électromagnétique passe principalement par un couplage inductif si l'antenne primaire est une bobine à spires. La performance de ce couplage nécessite tout d'abord la génération d'un champ magnétique par l'antenne rayonnante. Ce champ magnétique est en particulier piloté par l'inductance de l'antenne rayonnante. Pour maximiser l'inductance d'une bobine, il convient de réduire le rapport du pas d'hélice sur le diamètre d'enroulement de la bobine ou d'augmenter le nombre de boucles de la bobine. En réduisant le rapport du pas d'hélice sur le diamètre d'enroulement des boucles de la deuxième zone de l'antenne rayonnante, on maximise le couplage inductif en augmentant l'inductance de l'antenne. De plus, si ce rapport est diminué en ne modifiant que le pas d'hélice de l'antenne, on augmente aussi le nombre de spires constituant la deuxième zone de l'antenne, ce qui augmentera la surface de transfert d'énergie entre les deux antennes. Cette augmentation de la surface de transfert d'énergie est bien entendu favorable à la performance de communication du transpondeur radiofréquence.

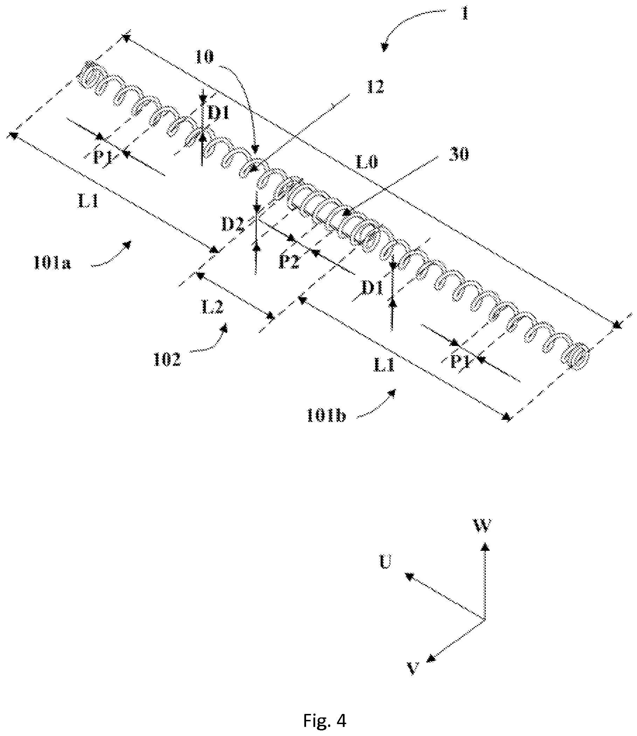

La Fig 4 est une illustration d'un transpondeur radiofréquence 1 fonctionnant dans la gamme de fréquences entre 860 et 960 Mhz et destiné à être incorporé dans une enveloppe pneumatique Pour faciliter la performance de radiocommunication et l'intégrité physique du transpondeur radiofréquence 1 au sein de l'enveloppe pneumatique présentant une tringle, sans pour autant dégrader l'endurance de l'enveloppe pneumatique, il sera préférable de disposer l'axe de révolution de l'antenne rayonnante 10, parallèle à l'axe U, de telle sorte qu'il s'appuie sur au moins deux éléments de renforcement de la couche d'armature de carcasse de l'enveloppe pneumatique. En particulier si l'enveloppe pneumatique présente une seule couche d'armature de carcasse, comme par exemple, dans une enveloppe pneumatique usuelle de type radial, l'axe de révolution de l'antenne rayonnante 10 sera perpendiculaire à la direction de renforcement défini par les éléments de renforcement radiaux de la couche d'armature de carcasse permettant de multiplier les points d'ancrage mécanique pour le transpondeur radiofréquence passif notamment si son incorporation est effectuée au cours de la fabrication de l'enveloppe pneumatique. De ce fait, le transpondeur radiofréquence passif 1 sera placé circonférenciellement par rapport à l'axe de révolution ou de référence de l'enveloppe pneumatique.

De plus le transpondeur radiofréquence sera placé axialement extérieurement par rapport à l'extrémité axialement intérieurement du bourrelet. C'est une zone stable mécaniquement ne subissant pas de fortes variations imprévues de déformations thermomécaniques. Enfin, le transpondeur radiofréquence passif 1 sera placé radialement entre l'extrémité radialement supérieure de la tringle et l'extrémité axiale du bloc sommet de l'enveloppe pneumatique. Ce positionnement suivant la direction radiale facilite la communication du transpondeur radiofréquence passif incorporé dans une enveloppe pneumatique d'un véhicule terrestre avec un lecteur radiofréquence situé à l'extérieur du véhicule terrestre en interposant peu d'éléments conducteurs entre le lecteur radiofréquence et le transpondeur radiofréquence passif 1.

Le transpondeur radiofréquence 1 présente ici une antenne rayonnante 10 et une partie électronique située à l'intérieur de l'antenne rayonnante 10. La partie électronique comprend une puce électronique connectée à un circuit imprimé et une antenne primaire constituée d'un fil conducteur comprenant dix-sept spires rectangulaires connectées au circuit imprimé. La face du circuit imprimé opposée à l'antenne primaire comprend un circuit galvanique en forme de méandre constituant une ligne de 10 millimètres de long et de 1 millimètre de large. Enfin, le diamètre du cylindre circonscrit de l'antenne primaire est de 0,8 millimètres.

La carte électronique ainsi constituée est noyée dans une masse 30 en résine époxy assurant la fiabilité mécanique des composants électroniques et l'isolation électrique de la carte électronique. Le cylindre circonscrit à la masse rigide 30 a un diamètre de 1,15 millimètres et une longueur de 6 millimètres.

La longueur L0 de l'antenne rayonnante 10 est ici de 45 millimètres et correspond à la demi-longueur d'onde des ondes radioélectriques à la fréquence de 915 MHz dans un milieu de permittivité diélectrique relatif environ égale à 5. L'antenne rayonnante 10 est réalisée à l'aide d'un fil d'acier 12 de diamètre 0,225 millimètre revêtu en surface d'une couche de laiton.

L'antenne rayonnante 10 se décompose en deux zones principales. La première zone 101 correspond à la section de l'antenne rayonnante ne se situant pas au droit de la partie électronique. Elle comprend deux sous zones 101a et 101b entourant de part et d'autre la masse 30 rigide et isolante.

Chaque sous zone 101a, 101b d'une longueur L1 de 19 millimètres comprend 12 spires circulaires d'un diamètre d'enroulement D1 constant de 1,275 millimètres. Cela détermine des diamètres intérieur et extérieur de respectivement 1,05 et 1,5 millimètres. Le pas d'hélice P1 des spires circulaires est de 1,55 millimètres. Ainsi, le rapport du pas d'hélice P1 sur le diamètre d'enroulement D1 des spires est de 1,21. Les extrémités axialement extérieures de chaque sous zone 101a et 101b se terminent par 2 spires jointives. De ce fait, un rapport élevé assure de maximiser l'efficacité des propriétés radioélectriques de l'antenne rayonnante 10 dans cette zone 101. De plus, le contact entre les spires situées le plus extérieurement à l'antenne rayonnante 10 empêche l'entrelacement des ressorts hélicoïdaux entre eux lors de la manipulation des transpondeurs radiofréquences. Comme la majorité des spires de la première zone 101 de l'antenne rayonnante 10 présente un rapport supérieur à 0,8, la performance radioélectrique du transpondeur radiofréquence 1 est nettement améliorée.

Sur la seconde zone 102 de l'antenne rayonnante 10 correspondant à la section de l'antenne rayonnante 10 se situant au droit de la partie électronique, l'antenne rayonnante présente une longueur de 7 millimètres. Le ressort hélicoïdal présente un pas d'hélice P2 constant de 1 millimètre et un diamètre d'enroulement D2 constant de 1,575 millimètres. Ainsi, le diamètre intérieur du ressort hélicoïdal de la deuxième zone de l'antenne rayonnante est de 1,35 millimètres. Cela permet d'avoir un rapport du pas d'hélice sur le diamètre d'enroulement constant de l'ordre de 0,63. Ce rapport permet de maximiser l'inductance de la deuxième zone 102 de l'antenne rayonnante10 par rapport à la première zone 101, ce qui permet une meilleure efficacité de couplage électromagnétique avec la partie électronique.

Dans ce cas particulier, le diamètre intérieur de l'antenne rayonnante 10, égal à 1,05, de la première zone 101 est inférieur au diamètre de la masse 30, représentant le cylindre circonscrit de la partie électronique, égal à 1,15 millimètres. De ce fait, les sous zones 101a et 101b de la première zone 101 de l'antenne rayonnante 10 représentent des butées mécaniques au mouvement axial de la masse 30 à l'intérieur de l'antenne rayonnante 10. La mise en place de la partie électronique sera réalisée par enfilement de la masse 30 rigide et isolante dans l'antenne rayonnante 10.

De plus, le diamètre du cylindre circonscrit à l'antenne primaire est bien supérieur au tiers du diamètre intérieur du ressort hélicoïdal de la deuxième zone 102 de l'antenne rayonnante. Bien que le cylindre circonscrit à l'antenne primaire ne soit pas coaxial à l'axe de révolution U de l'antenne rayonnante 10, il lui est sensiblement parallèle. Et, la distance minimale entre la deuxième zone 102 de l'antenne rayonnante 10 et l'antenne primaire est inférieure à 0,3 millimètres, bien inférieure au quart du diamètre intérieur de l'antenne rayonnante 10. Cette proximité des antennes est autorisée par le pas P2 resserré appliqué à la deuxième zone 102 de l'antenne rayonnante 10 permettant d'obtenir une tolérance plus petite des dimensions du ressort en particulier le diamètre d'enroulement D2. De plus cette proximité assure un couplage électromagnétique entre les deux antennes de meilleure qualité. Bien entendu, ce couplage électromagnétique aurait pu être amélioré en utilisant des spires de forme identique entre l'antenne primaire et l'antenne rayonnante, comme par exemple des spires circulaires. Ce couplage aurait été optimisé aussi en rendant coaxial les axes des deux antennes, ce qui revient à placer la carte électronique à l'intérieur de l'antenne primaire pour minimiser la dimension axiale de la partie électronique. Ainsi, la qualité de la surface de transfert d'énergie électromagnétique entre les deux antennes aurait été optimale.

D'autres modes de réalisation spécifiques, notamment en cas de variation du diamètre d'enroulement du ressort hélicoïdal entre les première et deuxième zones de l'antenne rayonnante, en particulier dans le cas où le diamètre intérieur de la première zone de l'antenne rayonnante est plus petit que le diamètre du cylindre circonscrit à la partie électronique, peuvent être employés.

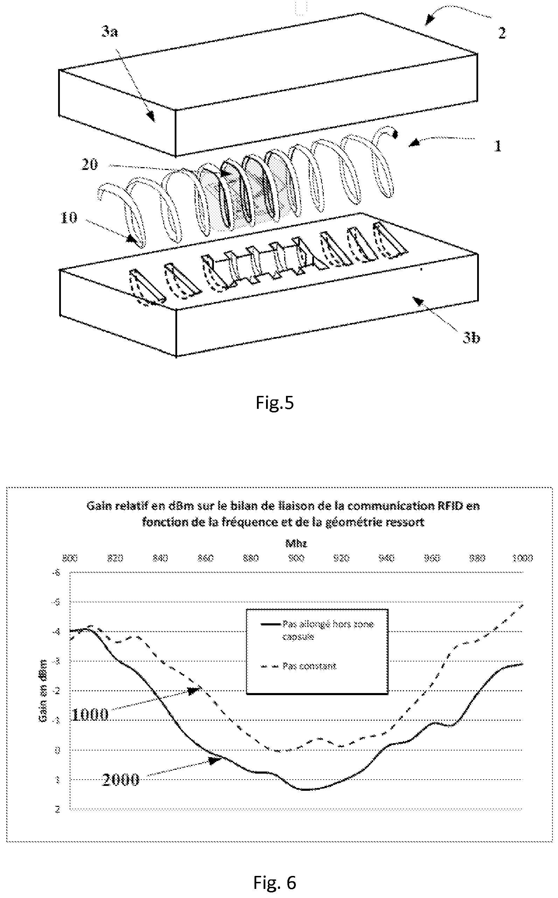

La Fig 5 présente un patch d'identification 2 comprenant un transpondeur radiofréquence passif 1 selon l'invention noyé dans une masse souple 3 en matériau élastomère isolant électriquement consstituée par les plaques 3a et 3b. Le transpondeur radiofréquence 1 est généralement placé au milieu du patch 2 afin de maximiser la plus petite distance entre la première zone 101 de l'antenne rayonnante 10 et la surface externe du patch d'identification 2.

Dans le cas où le rapport entre le pas d'hélice et le diamètre d'enroulement de la boucle de la première zone 101 de l'antenne rayonnante 10 est augmenté en réduisant le diamètre d'enroulement du fil d'acier, le volume occupé par le transpondeur radiofréquence 1 au sein de la masse 3 en matériau élastomère est diminué.

Cela permet, dans une première application, de réduire l'épaisseur de chacune des plaques 3a et 3b du patch d'identification 2 en gardant la même distance entre la surface externe du patch d'identification 2 et la première zone 101 de l'antenne rayonnante 10. Cette réduction de l'épaisseur du patch d'identification 2 facilitera son introduction au sein d'un objet à identifier tout en conservant le même potentiel d'isolation électrique. Dans une seconde application, cela permet d'augmenter la distance entre la première zone 101 de l'antenne rayonnante 10 et la surface externe du patch d'identification 2. Cette seconde application permet d'améliorer la performance radioélectrique et donc la performance de communication du transpondeur radiofréquence 1 placé dans le patch d'identification 2. En effet, l'isolation électrique du patch 2 est proportionnelle à la distance entre la première zone 101 de l'antenne rayonnante 10 et la surface externe du patch 2. Le fonctionnement radioélectrique du transpondeur radiofréquence 1 est amélioré, ou égal si cette distance a atteint son asymptote d'efficacité, par une meilleure isolation électrique du patch d'identification 2.

La Fig 6 est un graphe de la puissance électrique transmise par des transpondeurs radiofréquences passifs de l'état de la technique et de l'invention, situés chacun à l'intérieur d'une enveloppe pneumatique de marque Michelin PiloSport4 de dimension 255/35ZR19, à un lecteur radiofréquence externe. Les transpondeurs radiofréquences passifs sont situés au niveau de la zone du bourrelet, radialement à l'extérieur de l'extrémité radialement supérieure de la tringle, à une distance de 30 millimètres radialement en appui sur la quatrième couche de mélange élastomère. La fréquence de communication des transpondeurs radiofréquence est centrée sur 915 MHz. Le protocole de mesure employé correspond à la norme ISO/IEC 18046-3 intitulé « Identification Electromagnetic Field Threshold and Frequency Peaks ». Les mesures ont été effectuées pour un balayage en fréquence large et non ponctuellement comme habituellement. L'axe des abscisses représente la fréquence du signal de communication. L'axe des ordonnées est la puissance électrique reçue par le lecteur radiofréquence exprimée en décibels relativement à la puissance électrique maximale transmise par un transpondeur radiofréquence d'ancienne génération. La courbe en pointillés 1000 représente la réponse d'un transpondeur radiofréquence selon le document cité. La courbe en continu 2000 représente la réponse d'un transpondeur selon l'invention pour un même signal émis par le lecteur radiofréquence. On note un gain d'environ deux décibels en faveur du transpondeur radiofréquence selon l'invention sur la fréquence de communication du lecteur radiofréquence. Le gain reste de l'ordre d'au moins un décibel sur une bande de fréquences élargie autour de la fréquence de communication.

La direction circonférentielle du pneumatique, ou direction longitudinale, est la direction correspondant à la périphérie du pneumatique et définie par la direction de roulement de l'enveloppe pneumatique.

La direction transversale ou axiale du pneumatique est parallèle à l'axe de rotation ou axe de référence de l'enveloppe pneumatique.

La direction radiale est une direction coupant l'axe de revolution ou de référence de l'enveloppe pneumatique et perpendiculaire à celui-ci.

L'axe de rotation de l'enveloppe pneumatique est l'axe autour duquel il tourne en utilisation normale.

Un plan radial ou méridien est un plan qui contient l'axe de rotation du pneumatique.

Le plan médian circonférentiel, ou plan équatorial, est un plan perpendiculaire à l'axe de référence de l'enveloppe pneumatique et qui le divise en deux moitiés.

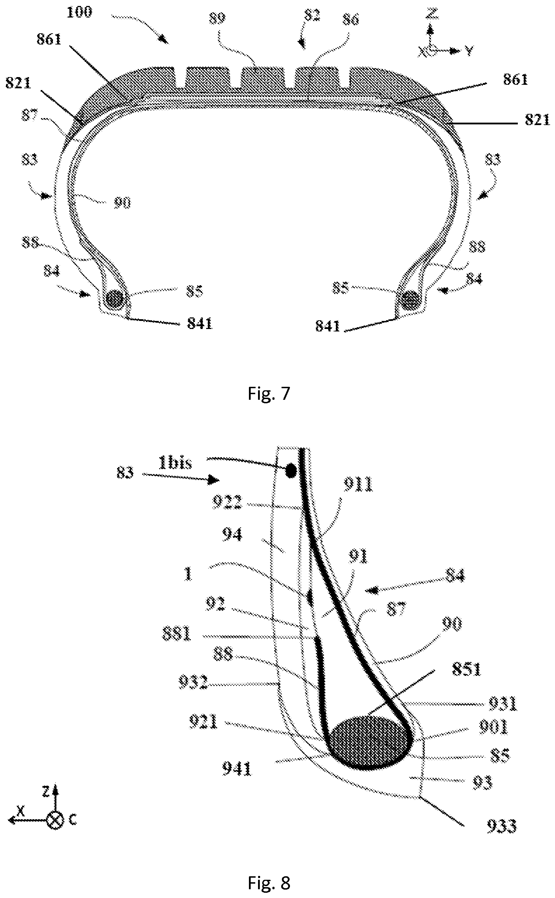

La Fig 7 présente une coupe méridienne d'une enveloppe pneumatique 100 comportant un sommet 82 renforcé par une armature de sommet ou ceinture 86, deux flancs 83 et deux bourrelets 84. Le sommet 82 est délimité axialement par deux extrémités axiales 821 assurant la connexion avec chaque flanc 83 de l'enveloppe pneumatique 100. L'armature de sommet 86 s'étend axialement jusqu'à une extrémité axiale 861 sur chacun de ses bords. L'armature de sommet 86 est surmontée radialement extérieurement d'une bande de roulement en matériau élastomère 89. Chaque bourrelet 84 est renforcé avec une tringle 85. Une armature de carcasse 87 ancrée dans les bourrelets 84 sépare l'enveloppe pneumatique en deux zones que l'on nommera zone intérieure en direction de la cavité fluide et zone extérieure vers l'extérieur du pneumatique. L'armature de carcasse comprend une partie principale 87 qui est enroulée autour des deux tringles 85 dans chaque bourrelet 84. Le retournement 88 de cette partie principale de l'armature de carcasse 87 est ici disposé vers l'extérieur de l'enveloppe pneumatique 100. L'armature de carcasse est de manière connue en soi constituée d'au moins une couche renforcée par des câbles par exemple ici textiles, c'est-à-dire que ces câbles sont disposés pratiquement parallèles les uns aux autres. La partie principale 87 s'étend d'un bourrelet 84 à l'autre de manière à former un angle compris entre 80° et 90° avec le plan circonférentiel médian EP. Une couche de gomme intérieure étanche 90 (en anglais « inner liner ») s'étend d'un bourrelet 84 à l'autre radialement intérieurement relativement à la partie principale de l'armature de carcasse 87.

La Fig 8 représente une vue de détail de l'enveloppe pneumatique 100 au niveau du bourrelet 84 et du flanc 83. Cette figure illustre le positionnement du transpondeur radiofréquence passif 1 dans la zone extérieure de l'enveloppe pneumatique 100 par rapport à la partie principale de l'armature de carcasse constituée, dans le cas représenté, par une seule couche de carcasse 87.

Le bourrelet 84 est constitué par la tringle 85 autour de laquelle s'enroule la partie principale de la couche de carcasse 87 avec une partie retournée 88 située dans la zone extérieure de l'enveloppe pneumatique 100. La partie retournée 88 de la couche carcasse se termine par un bord libre 881. Une quatrième couche de mélange caoutchouteux 91, nommée bourrage tringle, est située radialement extérieurement et de façon adjacente à la tringle 85. Elle présente un bord libre radialement extérieur 911 prenant appui sur une face de la partie principale de la couche de carcasse 87 (plus précisément sur le calandrage extérieur de la couche de carcasse, il n'y a pas de contact direct entre les câblés de la couche de carcasse et l'organe électronique). Une seconde quatrième couche de mélange caoutchouteux 92 nommée « bourrage de renfort » lui est adjacente. Elle possède deux bords libres. Le premier bord libre 921 est situé radialement intérieurement et prend appui sur la partie retournée 88 de la couche de carcasse. L'autre bord libre 922 est situé radialement extérieurement et se termine sur la face de la partie principale de la couche de carcasse 87. Enfin le flanc 83 est défini par l'intermédiaire d'une troisième couche de mélange élastomère 94 recouvrant à la fois la seconde quatrième couche de mélange élastomère 92 et la partie principale de la couche de carcasse 87. Le flanc défini par la surface externe de la troisième couche de mélange élastomère 94 qui possède un bord libre 941 situé radialement intérieurement et se terminant sur la partie retournée 88 de la couche de carcasse.

Sur la zone intérieure de l'enveloppe pneumatique 100 se trouve la gomme intérieure étanche 90 qui est adjacente à la partie principale de la couche de carcasse 87 dans cette configuration. Elle se termine par un bord libre 901 adjacent à la partie principale de la couche de carcasse 87. Enfin une deuxième couche de mélangé élastomère 93, nommé protecteur talon, vient protéger la couche de carcasse et les extrémités radialement intérieures 901, 921 et 941 respectivement de la gomme intérieure étanche 90, de la seconde quatrième couche de mélange élastomère 92 et de la troisième couche de mélange élastomère 94. La face extérieure de cette deuxième couche de mélange élastomère 93 est apte à être en contact direct avec le crochet de jante lors du montage de l'enveloppe pneumatique 100 sur la roue. Cette deuxième couche de mélange élastomère 93 présente trois extrémités libres formant un angle. La première extrémité libre 931 est située dans la zone intérieure de l'enveloppe pneumatique 100. La seconde extrémité libre 932 est située dans la zone extérieure de l'enveloppe pneumatique 100. Enfin, la troisième extrémité libre 933 constitue l'extrémité intérieure 841 du bourrelet 84.

Un bourrelet 84 et le flanc 83 qui lui est relié de cette enveloppe pneumatique 100 est équipé de transpondeurs radiofréquences passifs, numérotés 1 avec éventuellement des indices, situés dans la zone extérieure de l'enveloppe pneumatique 100. Le premier transpondeur radiofréquence passif 1 étant optionellement encapsulé dans une gomme d'enrobage isolante électriquement est positionné sur la face extérieure de la quatrième couche de mélange élastomère ou bourrage tringle 91. Il est positionné à une distance de 10 millimètres du bord libre 881 de la partie retournée 88 de la couche de carcasse qui constitue une singularité mécanique. Ce positionnement assure une zone de stabilité mécanique pour le transpondeur radiofréquence 1 qui est bénéfique à son endurance mécanique. De plus, son enfouissement au sein même de la structure de l'enveloppe pneumatique 100 lui assure une bonne protection aux agressions mécaniques en provenance de l'extérieur de l'enveloppe pneumatique 100.

Généralement, il est préférable de positionner le transpondeur radiofréquence passif à une distance radiale comprise entre 20 à 40 millimètres de l'extrémité radialement extérieure de la tringle 85 afin d'être dans une zone stable mécaniquement de l'enveloppe pneumatique en service, ce qui assure une intégrité physique du transpondeur radiofréquence. De plus, ce positionnement grantit d'être radialement à l'extérieur du crochet de jante, ce qui permet une bonne performance de radiocommunication en limitant les perturbations liées à la nature souvent métallique de la roue.

Le deuxième transpondeur radiofréquence 1bis étant optionnellement encapsulé dans une gomme d'enrobage isolante électriquement compatible ou similaire avec le matériau de la troisième couche de mélange élastomère 94 est positionné à l'intérieur de la troisième couche de mélange élastomère 94. La similarité de matériau entre la troisième couche de mélange élastomère 94 et la gomme d'enrobage assure une mise en place au sein du flanc 83 du transpondeur radiofréquence 1bis au cours du procédé de cuisson. Le transpondeur radiofréquence 1bis est simplement déposé au sein du matériau par l'intermédiaire d'une fente sur la face extérieure à cru de la troisième couche de mélange élastomère 94 au cours de la confection de l'enveloppe pneumatique 100. La mise sous pression de l'ébauche cru dans le moule de cuisson assure le positionnement du transpondeur radiofréquence 1bis à l'état cuit tel que représenté. Ce transpondeur radiofréquence 1bis est situé loin de tout bord libre d'un autre constituant de l'enveloppe pneumatique 100 quasiment à l'équateur du flanc 83 assurant la plus grande distance de communication radiofréquence. En particulier il est éloigné du bord libre 932 du protecteur talon, du bord libre 881 du retournement de la couche de carcasse 88 et des bords libres 911 et 922 des gommes de bourrage. Son positionnement assure une performance de communication accrue avec un lecteur radiofréquence externe d'autant plus avec la forme spécifique de l'antenne dipôle rayonnante du transpondeur radiofréquence passif. Les sollicitations cycliques lors du roulage ne seront pas gênantes en raison du découplage mécanique entre l'antenne rayonnante et la partie électronique du transpondeur radiofréquence passif 1bis. Nécessairement ces deux transpondeurs sont situés axialement extérieurement à l'extrémité 933 de la deuxième couche de mélange caoutchouteux 93 et donc de l'extrémité radialement intérieure du bourrelet 84. Ils sont positionnés radialement entre l'extrémité 851 radialement extérieure de la tringle 85 par rapport à l'axe de référence de l'enveloppe pneumatique 100 et les extrémités axiales 861 de l'armature de sommet 86. L'orientation du transpondeur radiofréquence passif est ici circonférentielle bien que la seule contrainte soit que l'antenne dipôle rayonnante repose sur au moins deux élements de renforcement de la partie principale de la couche d'armature de carcasse 87.

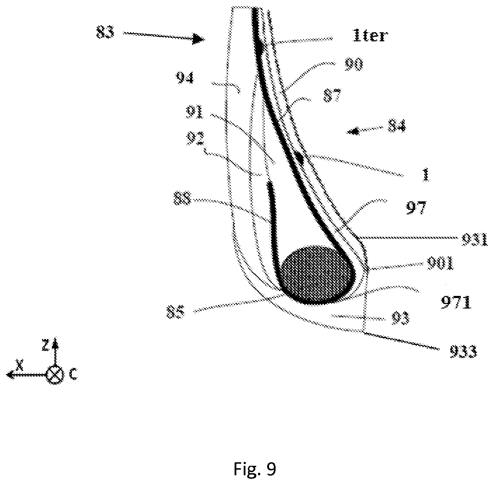

La Fig 9 représente une coupe méridienne de détail d'une enveloppe pneumatique 100 au niveau du bourrelet 84 et du flanc 83. Cette Fig 9 illustre le positionnement du transpondeur radiofréquence passif dans la zone intérieure de l'enveloppe pneumatique 100 par rapport à la partie principale de l'armature de carcasse 87.

L'enveloppe pneumatique 100 comprend en particulier au niveau de la zone intérieure, une gomme intérieure étanche 90 et une couche d'armature de renforts 97 intercalée entre la partie principale de la couche de carcasse 87 et la gomme intérieure étanche 90. Ce composant 97 présente un bord libre 971 radialement intérieur localisée radialement à l'intérieur de la tringle 85. Cette couche de renforts 97 s'étendd'un bourrelet 84 à l'autre bourrelet 84 de l'enveloppe pneumatique 100.

La localisation du transpondeur radiofréquence 1 au niveau de l'interface entre la gomme intérieure étanche 90 et la couche de renforts 97 permet une stabilisation mécanique du transpondeur radiofréquence 1. Celle-ci est radialement à l'extérieur d'environ 40 millimètres du bord libre 931 du protecteur talon 93, ce qui permet de la positionner radialement à l'extérieur du crochet de jante lorsque l'enveloppe pneumatique montée sur une roue est en service. En revanche, afin d'assurer une performance de radiocommunication convenable, il est préférable d'employer une gomme d'enrobage pour le transpondeur radiofréquence 1 qui soit isolante électriquement. D'un point de vue endurance mécanique, cette localisation est idéale pour le transpondeur radiofréquence passif 1 qui est protégé de toute agression mécanique externe et de toute agression thermomécanique interne. Son orientation est quelconque pourvu qu'elle repose sur au moins deux éléments de renforts de la couche d'armature de carcasse 87 et, le composant 97 étant une couche d'armature de renforts, sur plusieurs éléments de renforts de la couche de renforts 97. Cela assure un positionnement axial du transpondeur radiofréquence 1 par rapport à l'épaisseur de l'enveloppe pneumatique 100 permettant d'accorder de façon robuste la résonance de l'antenne rayonnante du transpondeur radiofréquence passif 1 lorsque celui-ci est intégré dans l'enveloppe pneumatique 100.

La seconde localisation du transpondeur radiofréquence 1ter selon l'invention permet une meilleure performance radiocommunication en étant placé radialement plus à l'extérieur dans l'enveloppe pneumatique 100. Toutefois, il est conseillé de l'enrober dans une gomme isolante électriquement et de positionner le premier axe longitudinal de l'antenne rayonnante de sorte que le transpondeur radiofréquence 1ter repose sur au moins deux éléments de renforts de la couche de carcasse 87. Ici, dans cet exemple, le premier axe longitudinal est placé circonférentiellement. Il est préférable de positionner le transpondeur radiofréquence passif 1ter à l'interface définie par au moins deux composants de l'enveloppe pneumatique 100. Cela rend infalsifiable l'information contenue dans la puce électronique du transpondeur radiofréquence passif lorsque celle-ci est bloquée en écriture après la première écriture sur la mémoire associée à la puce électronique.

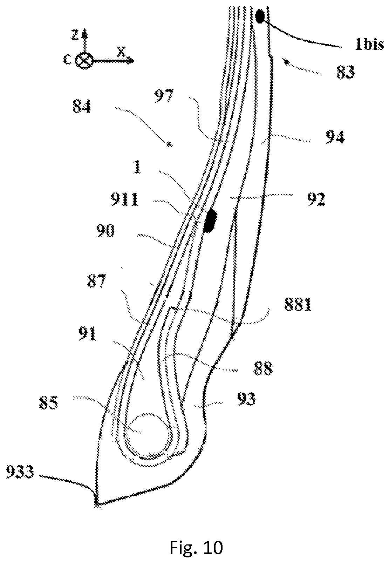

La Fig 10 représente une coupe méridienne d'une enveloppe pneumatique 100. Cette enveloppe pneumatique 100 comprend usuellement un sommet, deux flancs 83 et deux bourrelets 84. Ne sont représentés à la Fig 10 que la partie radialement intérieure d'un flanc 83 et un bourrelet 84. Le bourrelet 84 représenté à la Fig 10 comprend une tringle de révolution 85, une partie principale d'une première couche de carcasse 87 s'étendant du flanc 83 vers la tringle 85 prolongée par un retournement 88 enroulé autour de la tringle 85 et s'étendant radialement extérieurement jusqu'à une extrémité 881. Ce retournement 88 est disposé axialement vers l'extérieur du bourrelet 84 de l'enveloppe pneumatique 100. Une quatrième couche de mélange élastomère 91, appelée gomme de bourrage, est disposée radialement extérieurement relativement à la tringle 85 et axialement entre la partie principale 87 et le retournement 88 de la première couche de carcasse. Cette gomme de bourrage 91 s'étend radialement extérieurement jusqu'à une extrémité 911. Il est à noter que l'extrémité 911 de la gomme de bourrage est située radialement extérieurement relativement à l'extrémité 881 du retournement 88.

Le bourrelet 84 comprend aussi une deuxième couche de carcasse ou couche de renfort 97 s'étendant sur la figure du flanc 83 jusqu'à la tringle 85. Cette deuxième couche de carcasse 97 est disposée axialement extérieurement relativement à la partie principale de la première couche de carcasse 87, à la gomme de bourrage 91 et au retournement 88 de la première couche de carcasse. Les deux couches de carcasse (87, 97) sont de manière connue en soi constituées de nappes renforcées par des câbles dits « radiaux », par exemple ici textiles, c'est-à-dire que ces câbles sont disposés pratiquement parallèles les uns aux autres et s'étendent d'un bourrelet à l'autre de manière à former un angle compris entre 80° et 90° avec le plan circonférentiel médian EP de l'enveloppe pneumatique. Une couche de mélange élastomère étanche 90 (en anglais « inner liner ») située intérieurement à l'enveloppe pneumatique s'étend d'un bourrelet 84 à l'autre radialement intérieurement relativement à la partie principale de la première couche de carcasse 87. Le bourrelet 34 comporte une deuxième couche de mélange élastomère ou gomme protectrice (ou « protecteur », en anglais « cushion gum ») 93 apte à être en contact avec la surface d'une jante. Cette gomme protectrice 93 s' étend radialement extérieurement jusqu' à une interface avec une troisième couche de mélange élastomère 94 dont la surface externe définit le flanc 83. La gomme protectrice 93 et la gomme de flanc 94 constituent la couche extérieure de l'enveloppe pneumatique. Le bourrelet 84 comporte aussi une deuxième quatrième couche de mélange élastomère ou gomme de bourrage additionnelle 92 disposée axialement entre la deuxième couche de carcasse 97 d'une part, la gomme protectrice 93 et la gomme de flanc 94 d'autre part.

Le bourrelet 84 comporte aussi un transpondeur radiofréquence passif 1 disposé axialement à l'interface entre la deuxième couche de carcasse 97 et la gomme de bourrage additionnelle 92 et radialement entre l'extrémité 911 de la gomme de bourrage 91 et l'extrémité 881 du retournement 88 de la première couche de carcasse 87. Ici, le transpondeur radiofréqunce 1 est positionné radialement extérieurement par rapport à l'extrémité radialement extérieure de la tringle 85 à une distance de 40 millimètres.

La Fig 10 présente aussi le positionnement d'un second transpondeur radiofréquence passif 1bis à l'intérieur de la troisième couche de mélange élastomère 94 situé a proximité de l'équateur de l'enveloppe pneumatique. Cette seconde position permet d'améliorer la performance de communication d'un transpondeur radiofréquence en service sur un véhicule puisque cette position éloigne le transpondeur raiofréquence passif des éléments électroconducteurs du véhicule (roue, passage de roue). De plus, la conception particulière de l'antenne dipôle rayonnante de ce transpondeur radiofréquence permet d'optimiser la communication radioélectrique.

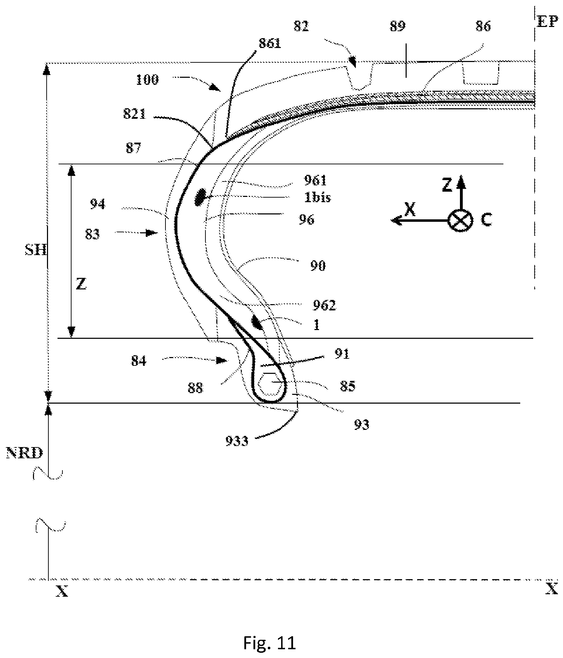

La Fig 11 illustre en coupe axiale partielle un pneumatique 100, apte à un roulage à plat, équipé d'un transpondeur radiofréquence passif selon l'invention. Cette Fig 11 indique aussi la hauteur de section SH de l'enveloppe pneumatique 100, c'est-à-dire la distance radiale entre le diamètre nominal de la jante de montage du pneumatique NRD et la partie radialement la plus extérieure de la bande de roulement 89 de l'enveloppe pneumatique 100. Dans le cadre de ce document, on prend comme diamètre nominal de la jante de montage du pneumatique, le diamètre de l'enveloppe pneumatique tel qu'indiqué par sa dimension.

L'enveloppe pneumatique 100 est représenté à l'état libre, c'est-à-dire non montée sur une jante de telle sorte que la largeur entre les deux bourrelets 84 est ramenée à la largeur de la jante nominale ETRTO.

En ce qui concerne la direction axiale, on entend par « axialement extérieur » une direction axiale dirigée vers l'extérieur du pneumatique et par « axialement intérieur » une direction axiale dirigée vers le plan médian EP de l'enveloppe pneumatique 100.

L'enveloppe pneumatique illustrée à la Fig 11 est un pneumatique apte au roulage à plat, mais il est choisi à titre purement illustratif et le transpondeur radiofréquence passif décrit peut être intégré dans et à la surface de tous types de pneumatiques.

La moitié du pneumatique 100 apte au roulage à plat comporte un sommet 82, délimité par une extrémité axiale 821 à chacun de ses bords, renforcé par une armature de sommet ou ceinture 86 délimité par une extrémité axiale 861 à chacun de ses bords, un flanc 83 et un bourrelet 84, le bourrelet 84 étant renforcé avec une tringle 85. L'armature de sommet 86 est surmontée radialement extérieurement d'une bande de roulement en mélange élastomère 89. Une armature de carcasse constituée d'une seule couche de carcasse 87 est enroulée autour de la tringle 85 dans le bourrelet 84, le retournement 88 de cette couche de carcasse 87 étant disposé axialement vers l'extérieur de l'enveloppe pneumatique 100. La couche de carcasse 87 est de manière connue en soi constituée d'au moins une nappe renforcée par des câbles dits « radiaux », par exemple ici textiles, c'est-à-dire que ces câbles sont disposés pratiquement parallèles les uns aux autres et s'étendent d'un bourrelet à l'autre de manière à former un angle compris entre 80° et 90° avec le plan circonférentiel médian EP. Une couche de gomme intérieure étanche 90 (en anglais « inner liner ») s'étend d'un bourrelet à l'autre radialement intérieurement relativement à l'armature de carcasse 87. Le bourrelet 84 comporte une deuxième couche de mélange élastomère (ou « protecteur ») 93 apte à être en contact avec la surface d'une jante se terminant par l'extrémité 933 représentant l'extrémité radialement intérieure 841 du bourrelet 84. Il comporte aussi une quatrième couche de mélange élastomère 91 s'étendant radialement extérieurement relativement à la tringle 85.

Le pneumatique 100 est apte à rouler à plat en raison de la présence d'un insert de flanc 96 disposé axialement intérieurement relativement à la partie principale de l'armature de carcasse 87. Cet insert de flanc 96 permet à la structure du pneumatique de supporter la charge à pression nulle. L'ordre de grandeur du module d'extension d'une gomme caoutchouteuse d'un insert de flanc est de l'ordre de deux fois la valeur du module d'une gomme de flanc ou plus.

L'insert de flanc 96 de la Fig 11 comporte un premier transpondeur radiofréquence passif 1 disposé à une distance radiale D1 de l'extrémité radialement intérieure 933 du bourrelet 84. La distance D1 doit être supérieure à D0 égale à 20 mm pour ne pas pénaliser la qualité de communication entre le transpondeur radiofréquence passif 1 et un lecteur externe. Cette distance est supérieure à la hauteur d'un crochet de jante usuel qui est de 17,5 mm. Préférentiellememt, la distance D1 est inférieure à 50 millimètres

On place de préférence le premier transpondeur radiofréquence passif 1 dans le semi-fini de l'insert de flanc 96 avant son incorporation dans l'ébauche de l'enveloppe pneumatique 100.

L'insert de flanc 96, dans l'exemple de la Fig 11, est constitué de deux masses de gommes 961 et 962 adjacentes axialement l'une par rapport à l'autre. Le premier transpondeur radiofréquence passif 1 est placé à l'interface entre les deux masses de gommes 961 et 962.

Ce mode de réalisation facilite la mise en place précise et reproductible du transpondeur radiofréquence passif 1 lors de la confection de l'enveloppe pneumatique 100.

Un second transpondeur radiofréquence passif 1bis est placé à l'intérieur de la masse de gomme 962 par l'intermédiaire d'une fente située sur l'une des surfaces de la masse de gomme 962 permettant l'insertion du transpondeur radiofréquence passif 1bis au sein de la masse de gomme 962. Ce second mode de réalisation facilite le positionnement du transpondeur radiofréquence passif par rapport à la partie principale de la couche d'armaturede carcasse 87, en étant en contact avec la masse de gomme, et homogénéise l'environnement diélectrique à proximité du transpondeur radiofréquence passif 1bis, ce qui améliore sa performance radiofréquence. De plus, elle est située plus radialement extérieurement par rapport à l'axe de révolution de référence de l'enveloppe pneumatique 100.

La Fig 11 illustre la zone Z de la hauteur de section SH de l'enveloppe pneumatique 100 dans laquelle il est préférable de positionner les transpondeurs radiofréquences passifs 1 et 1bis. Cette zone Z s'étend de 20 à 70% de SH. Le transpondeur radiofréquence passif 1 est placé à environ 25% de SH et le transpondeur radiofréquence passif 1bis à 60% de cette grandeur.

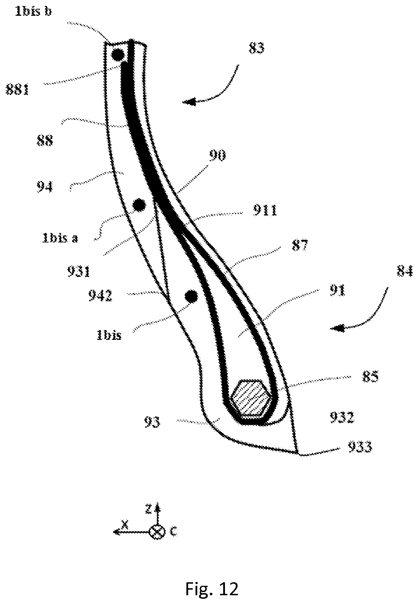

La Fig 12 est une coupe axiale d'une eveloppe pneumatique 100 au niveau du bourrelet 84 et du flanc 83. L'enveloppe pneumatique comprend un bloc sommet se terminant par un bourrelet 84 à chacune de ses bords axiaux par l'intermédiaire d'un flanc 83.

La Fig 12 présente un bourrelet 84 et un flanc 83 de pneumatique pour, principalement, des véhicules de tourisme. L'armature de carcasse, constituée d'une seule couche de carcasse sur la Fig 12, est ancrée dans le bourrelet 84 par retournement autour de la tringle 85 afin de créer une partie principale 87 et un retournement 88 de l'armature de carcasse. Les fils de renfort de la couche de carcasse sont des fils textiles. La quatrième couche de mélange élastomère 91 sépare la partie principale de l'armature de carcasse 87 du retournement 88. Le retournement 88 de l'armature de carcasse s'étend radialement vers l'extérieur dans la zone du flanc 83 au-delà de l'extrémité radialement extérieure 911 de la quatrième couche de mélange élastomère 91.

La deuxième couche de mélange élastomère 93, couche en contact avec la jante lorsque l'enveloppe pneumatique est montée sur celle-ci, et la troisième couche de mélange élastomère 94 assurant la surface extérieure du pneumatique dans la zone de flanc 83 sont directement en contact avec le retournement 88. Il n'y a pas d'autre quatrième couche de mélange élastomère Ce bourrelet 84 comprend un premier transpondeur radiofréquence passif 1bis noyé dans la deuxième couche de mélange élastomère 93 à une position radialement extérieure relativement à la tringle 85 dans une fourchette comprise entre 20 et 40 millimètres pour être radialement extérieur au crochet de la jante J après montage du pneumatique pour assurer une bonne communication entre le transpondeur radiofréquence et un lecteur extérieur.

Cette Fig 12 présente aussi deux positions alternatives 1bis a et 1bis b dans lesquelles le transpondeur radiofréquence passif est noyé dans la troisième couche de mélange élastomère 94. Comme précédemment ces deux dernières positions sont rendues possibles en raison de la bonne résistance mécanique du transpondeur radiofréquence passif de l'invention. Toutes ces positions sont à l'intérieur de l'enveloppe pneumatique , axialement extérieurement à l'extrémité 933 de la deuxième couche de mélange élastomère qui constitue l'extrémité intérieure 841 du bourrelet 84.

Il est aussi possible de positionner ses transpondeurs radiofréquences à l'interface entre la deuxième couche de mélange élastomère 93 et le retournement 88 ou la troisième couche de mélange élastomère 94 et le retournement 88 ou la partie principale 87 de l'armature de carcasse. Il est alors conseillé d'enrober le transpondeurs radiofréquences passif dans une masse d'enrobage et d'éloigner celui-ci des extrémités 931 des couches de mélanges élastomères 93 et 94 et de l'extrémité 881 du retournement 88 d'au moins 5 voire 10 millimètres pour préserver l'intégrité physique de l'enveloppe pneumatique.

Bien entendu, l'orientation de l'antenne dipôle rayonnante du transpondeur radiofréquence passif par rapport à la direction définie par les éléments de renforcemet de la partie principale de l'armature de caracasse est quelconque tant que la projection de l'antenne dipôle rayonnante intercepte au moins deux éléments de renforcement. Par conséquent, lorsque l'on parle de distance entre l'extrémité d'une couche et le transpondeur radiofréquence passif, on évoque la distance pour chaque point matériel du transpondeur radiofréquence passif dans chaque plan méridien de l'enveloppe pneumatique par rapport à l'extrémité de la couche dans le même plan méridien . On entend par transpondeur radiofréquence passif le fait que celui-ci est équipé d'une masse d'enrobage potentiellement. Cependant, il est plus pratique de positionner directement le transpondeur radiofréquence passif de sorte que le premier axe longitudianl soit sensiblement perpendiculaire à la direction des éléments de renforcement de la partie principale de la couche d'armature de carcasse.

## Revendications

1. Enveloppe pneumatique (100) de forme toroïdale autour d'un axe de référence équipée d'un transpondeur radiofréquence passif (1, 1bis, 1ter) et comportant :
- Un bloc sommet (82) comportant une armature de sommet (86) présentant une extrémité axiale (861) à chacun de ses bords et une bande de roulement (89), réuni à chacune de ses extrémités axiales (821) à un bourrelet (84) présentant une extrémité intérieure (841), située axialement et radialement intérieurement au bourrelet (84) par rapport à l'axe de référence, par l'intermédiaire d'un flanc (83),
- Une armature de carcasse, comprenant au moins une couche d'armature de carcasse formée d'éléments de renforcement parallèles entre eux insérés entre deux couches de calandrage en mélange élastomère,
- La au moins une couche d'armature de carcasse étant ancrée dans chacun des bourrelets (84) par retournement autour d'une tringle (85) annulaire pour former une partie principale de la au moins une couche d'armature de carcasse (87), s'étendant d'une tringle (85) à l'autre et située radialement intérieurement par rapport au bloc sommet (82), et un retournement de la au moins une couche d'armature de carcasse (88) dans chacun des bourrelets (84),
- Une deuxième couche de mélange élastomère (93) formant la surface extérieure de l'enveloppe pneumatique (100) dans la zone du bourrelet (84), ladite seconde couche de mélange élastomère (93) étant destinée à venir en contact avec la jante,
- Une troisième couche de mélange élastomère (94) au située radialement extérieurement au contact de la deuxième couche de mélange élastomère (93) formant la surface extérieure dudit flanc (83),
- Le transpondeur radiofréquence passif (1, 1bis, 1ter) comprenant une partie électronique (20) et une antenne dipôle rayonnante (10) constituée d'un ressort hélicoïdal monobrin définissant un pas d'hélice P, un diamètre d'enroulement D, un plan médian (19) et un diamètre de fil définissant des diamètres intérieur (13) et extérieur (15) de l'antenne rayonnante (10), dont la longueur (L0) est adaptée pour communiquer sur une bande de fréquence avec un lecteur radiofréquence externe définissant un premier axe longitudinal (11) ,une zone centrale et deux zones latérales suivant le premier axe longitudinal (11),
- La partie électronique (20) comprenant une puce électronique et une antenne primaire de type bobine comprenant au moins un tour, et définissant ainsi un second axe longitudinal et un plan médian (21) perpendiculaire au second axe longitudinal, ladite antenne primaire étant connectée électriquement à la puce électronique et couplée électro-magnétiquement à l'antenne dipôle rayonnante (10), ladite antenne primaire étant circonscrite dans un cylindre dont l'axe de révolution est parallèle au second axe longitudinal et dont le diamètre est supérieur ou égal au tiers du diamètre intérieur (13) de l'antenne rayonnante (10) située au droit de l'antenne primaire,
- que les premier (11) et second axes longitudinaux soient parallèles et que le plan médian de l'antenne primaire (21) soit placé dans la zone centrale du ressort hélicoïdal (10),
- l'antenne dipôle rayonnante (10) comprenant une deuxième zone (102) où l'antenne dipôle rayonnante (10) est située au droit de la partie électronique (20) et une première zone (101, 101a, 101b) où l'antenne dipôle rayonnante (10) n'est pas située au droit de la partie électronique (20), le rapport entre le pas d'hélice (P1) et le diamètre d'enroulement (D1) pour au moins une boucle du ressort hélicoïdal de la première zone (101, 101a, 101b) étant supérieur à 0,8 , le rapport entre le pas d'hélice (P1) et le diamètre d'enroulement (D1) de chaque boucle du ressort hélicoïdal dans la première zone (101, 101a, 101b) de l'antenne dipôle rayonnante (10) étant inférieur à 3,
**caractérisé en ce que** l'antenne dipôle rayonnante (10) est située au droit d'au moins deux éléments de renforcement de la partie principale de la au moins une couche d'armature de carcasse (87), c'est-à-dire que la projection orthogonale de l'antenne dipôle rayonnante ( 10), sur le plan défini par deux éléments de renforcement parallèles de la partie principale de la au moins une couche d'armature de carcasse coupe ces deux éléments de renforcement au moment de l'ébauche à cru de l'enveloppe pneumatique (100), **en ce que** le transpondeur radiofréquence passif se situe axialement extérieurement par rapport à l'extrémité intérieure (841) du bourrelet (84) et radialement entre l'extrémité la plus radialement extérieure (851) de la tringle (85) et l'extrémité axiale (861) de l'armature de sommet (86) et **en ce que** le premier pas (P1) de l'antenne dipôle rayonnante (10) correspondant au pas d'hélice de l'antenne dipôle rayonnante (10) dans la première zone (101,101a, 101b) est supérieur au deuxième pas (P2) de l'antenne dipôle rayonnante (10) correspondant au pas d'hélice de l'antenne dipôle rayonnante (10) dans la deuxième zone (102) où l'antenne dipôle rayonnante (10) est située au droit de la partie électronique (20).

2. Enveloppe pneumatique (100) selon la revendication 1 dans laquelle, l'enveloppe pneumatique (100) comprend au moins une quatrième couche de mélange élastomère (92) située axialement extérieurement à la partie principale de la au moins une couche d'armature de carcasse (87) et axialement intérieurement à la deuxième (93) et/ou troisième (94) couche de mélange élastomère.

3. Enveloppe pneumatique (100) selon l'une des revendications 1 à 2 dans laquelle, l'enveloppe pneumatique (100) comprenant au moins une couche étanche en mélange élastomère (90) située le plus intérieurement à l'enveloppe pneumatique (100), l'enveloppe pneumatique (100) comprend au moins une cinquième couche de mélange élastomère (96) axialement intérieurement à la partie principale de la au moins une couche d'armature de carcasse (87).

4. Enveloppe pneumatique (100) selon l'une des revendications 1 à 3 dans laquelle, l'enveloppe pneumatique (100) comprend au moins une couche d'armature de renforts (97) formée d'éléments de renforcement insérés entre deux couches de calandrage en mélange caoutchouteux.

5. Enveloppe pneumatique (100) selon l'une des revendications 1 à 4 dans laquelle, le transpondeur radiofréquence passif (1, 1bis, 1ter) est en partie enrobé dans une masse de mélange élastomère isolante électriquement (3a, 3b).

6. Enveloppe pneumatique (100) selon la revendication 5, dans laquelle le module d'élasticité en extension de la masse d'enrobage (3a, 3b) est inférieur au module d'élasticité en extension d'au moins un mélange élastomère adjacent à ladite masse d'enrobage (3a, 3b).

7. Enveloppe pneumatique (100) selon l'une des revendications 5 à 6, dans laquelle la constante diélectrique relative de la masse d'enrobage (3a, 3b) est inférieure à 10.

8. Enveloppe pneumatique (100) selon l'une des revendications 1 à 7 dans laquelle, le transpondeur radiofréquence passif (1, 1ter) est situé à une interface définie par au moins une surface d'une couche de mélange élastomère (91, 92, 93, 94, 96) de ladite enveloppe pneumatique (100).

9. Enveloppe pneumatique (100) selon la revendication 8 dans laquelle, l'interface étant définie par une autre couche de mélange élastomère (91, 92, 93, 94, 96) ou une couche d'armature (97), le transpondeur radiofréquence passif (1, 1ter) est situé à une distance d'au moins 5 millimètres des extrémités des couches (91, 92, 93, 94, 96, 97) au niveau de l'interface.

10. Enveloppe pneumatique (100) selon l'une des revendications 1 à 7 dans laquelle, le transpondeur radiofréquence passif (1bis) est situé à l'intérieur d'une couche de mélange élastomère (91, 92, 93, 94, 96) de ladite enveloppe pneumatique (100).

11. Enveloppe pneumatique (100) selon la revendication 10 dans laquelle, le premier axe longitudinal (11) de l'antenne rayonnante (10) dudit transpondeur radiofréquence passif (1bis) est perpendiculaire à l'épaisseur de la couche de mélange élastomère (91, 92, 93, 94, 96).

12. Enveloppe pneumatique (100) l'une des revendications 10 à 11 dans laquelle le transpondeur radiofréquence passif (1bis) est situé à une distance d'au moins 0,3 millimètre des surfaces de la couche de mélange élastomère (91, 92, 93, 94, 96).

13. Enveloppe pneumatique (100) selon l'une des revendications précédentes dans laquelle le rapport entre le pas d'hélice (P2) et le diamètre d'enroulement (D2) pour chaque boucle de la deuxième zone (102) est inférieur ou égal à 0,8.

14. Enveloppe pneumatique (100) selon l'une des revendications précédentes dans laquelle, la partie électronique (20) étant placée à l'intérieur de l'antenne dipôle rayonnante (10), le premier diamètre intérieur D1' de l'antenne dipôle rayonnante (10) dans la première zone (101, 101a, 101b) est inférieur au deuxième diamètre intérieur D2' de l'antenne dipôle rayonnante (10) dans une deuxième zone (102) et la partie électronique (20) est circonscrite dans un cylindre dont l'axe de révolution est parallèle au premier axe longitudinal (11) et dont le diamètre est supérieur ou égal au premier diamètre intérieur D1' de l'antenne dipôle rayonnante (10).

## Patentansprüche

1. Luftreifen (100) von ringförmiger Form um eine Referenzachse herum, der mit einem passiven Hochfrequenztransponder (1, 1bis, 1ter) ausgestattet ist und umfasst:
- einen Gürtelverbund (82), der eine Gürtelverstärkung (86), die ein axiales Ende (861) an jedem ihrer Ränder aufweist, und einen Laufstreifen (89) umfasst und der an jedem seiner axialen Enden (821) über eine Seitenwand (83) mit einem Wulst (84) verbunden ist, der ein inneres Ende (841) aufweist, das bezogen auf die Referenzachse axial und radial innerhalb des Wulstes (84) gelegen ist,
- eine Karkassenverstärkung, die mindestens eine Karkassenverstärkungslage umfasst, die aus parallel zueinander verlaufenden Verstärkungselementen gebildet ist, die zwischen zwei Kalandrierlagen aus Elastomermischung angeordnet sind,
- wobei die mindestens eine Karkassenverstärkungslage in jedem der Wülste (84) durch Umschlagen um einen ringförmigen Wulstkern (85) verankert ist, um einen Hauptteil der mindestens einen Karkassenverstärkungslage (87), der sich von einem Wulstkern (85) zum anderen erstreckt und radial innerhalb bezogen auf den Gürtelverbund (82) gelegen ist, und einen Umschlag der mindestens einen Karkassenverstärkungslage (88) in jedem der Wülste (84) zu bilden,
- wobei eine zweite Elastomermischungslage (93) die Außenoberfläche des Luftreifens (100) im Bereich des Wulstes (84) bildet, wobei die zweite Elastomermischungslage (93) dazu bestimmt ist, mit der Felge in Kontakt zu gelangen,
- wobei eine dritte Elastomermischungslage (94), die radial außerhalb in Kontakt mit der zweiten Elastomermischungslage (93) gelegen ist, die Außenoberfläche der Seitenwand (83) bildet,
- wobei der passive Hochfrequenztransponder (1, 1bis, 1ter) einen elektronischen Teil (20) und eine abstrahlende Dipolantenne (10) umfasst, die aus einer einsträngigen Schraubenfeder besteht, die eine Helixsteigung P, einen Wicklungsdurchmesser D, eine Mittelebene (19) und einen Drahtdurchmesser definiert, die Innendurchmesser (13) und Außendurchmesser (15) der abstrahlenden Antenne (10) definieren, deren Länge (L0) angepasst ist, um über ein Frequenzband mit einem externen Hochfrequenz-Lesegerät zu kommunizieren, und die eine erste Längsachse (11), einen zentralen Bereich und zwei seitliche Bereiche entlang der ersten Längsachse (11) definiert,
- wobei der elektronische Teil (20) einen elektronischen Chip und eine Primärantenne vom Spulentyp umfasst, die mindestens eine Windung umfasst und somit eine zweite Längsachse und eine Mittelebene (21) senkrecht zu der zweiten Längsachse definiert, wobei die Primärantenne elektrisch mit dem elektronischen Chip verbunden ist und elektromagnetisch mit der abstrahlenden Dipolantenne (10) gekoppelt ist, wobei die Primärantenne in einen Zylinder einbeschrieben ist, dessen Rotationsachse parallel zu der zweiten Längsachse verläuft und dessen Durchmesser größer oder gleich einem Drittel des Innendurchmessers (13) der abstrahlenden Antenne (10) ist, die gegenüber der Primärantenne gelegen ist,
- dass die erste (11) und die zweite Längsachse parallel sind und die Mittelebene der Primärantenne (21) in der zentralen Zone der Schraubenfeder (10) angeordnet ist,
- wobei die abstrahlende Dipolantenne (10) einen zweiten Bereich (102), in dem die abstrahlende Dipolantenne (10) gegenüber dem elektronischen Teil (20) gelegen ist, und einen ersten Bereich (101, 101a, 101b), in dem die abstrahlende Dipolantenne (10) nicht gegenüber dem elektronischen Teil (20) gelegen ist, umfasst, wobei das Verhältnis zwischen der Helixsteigung (P1) und dem Wicklungsdurchmesser (D1) bei mindestens einer Windung der Spiralfeder des ersten Bereichs (101, 101a, 101b) größer als 0,8 ist, wobei das Verhältnis zwischen der Helixsteigung (P1) und dem Wicklungsdurchmesser (D1) jeder Windung der Spiralfeder in dem ersten Bereich (101, 101a, 101b) der abstrahlenden Dipolantenne (10) kleiner als 3 ist,
**dadurch gekennzeichnet, dass** die abstrahlende Dipolantenne (10) gegenüber mindestens zwei Verstärkungselementen des Hauptteils der mindestens einen Karkassenverstärkungslage (87) gelegen ist, d. h., dass die orthogonale Projektion der abstrahlenden Dipolantenne (10) auf die Ebene, die durch zwei parallele Verstärkungselemente des Hauptteils der mindestens einen Karkassenverstärkungslage definiert ist, diese beiden Verstärkungselemente im Rohling-Zustand des Luftreifens (100) schneidet, dass sich der passive Hochfrequenztransponder axial außerhalb bezüglich des inneren Endes (841) des Wulstes (84) und radial zwischen dem radial äußersten Ende (851) des Wulstkerns (85) und dem axialen Ende (861) der Gürtelverstärkung (86) befindet und dass die erste Steigung (P1) der abstrahlenden Dipolantenne (10), die der Helixsteigung der abstrahlenden Dipolantenne (10) in der ersten Zone (101, 101a, 101b) entspricht, größer ist als die zweite Steigung (P2) der abstrahlenden Dipolantenne (10), die der Helixsteigung der abstrahlenden Dipolantenne (10) in der zweiten Zone (102) entspricht, in der die abstrahlende Dipolantenne (10) gegenüber dem elektronischen Teil (20) angeordnet ist.

2. Luftreifen (100) nach Anspruch 1, wobei der Luftreifen (100) mindestens eine vierte Elastomermischungslage (92) umfasst, die axial außerhalb des Hauptteils der mindestens einen Karkassenverstärkungslage (87) und axial innerhalb der zweiten (93) und/oder dritten (94) Elastomermischungslage gelegen ist.

3. Luftreifen (100) nach einem der Ansprüche 1 bis 2, wobei, wenn der Luftreifen (100) mindestens eine dichte Lage aus Elastomermischung (90) umfasst, die axial am weitesten innen im Luftreifen (100) gelegen ist, der Luftreifen (100) mindestens eine fünfte Elastomermischungslage (96) axial innerhalb des Hauptteils der mindestens einen Karkassenverstärkungslage (87) umfasst.

4. Luftreifen (100) nach einem der Ansprüche 1 bis 3, wobei der Luftreifen (100) mindestens eine Verstärkungsaussteifungslage (97) umfasst, die aus Verstärkungselementen gebildet wird, die zwischen zwei Kalandrierlagen aus Elastomermischung angeordnet sind.

5. Luftreifen (100) nach einem der Ansprüche 1 bis 4, wobei der passive Hochfrequenztransponder (1, 1bis, 1ter) zum Teil in eine elektrisch isolierende Elastomermischungsmasse (3a, 3b) eingebettet ist.

6. Luftreifen (100) nach Anspruch 5, wobei der Dehnungselastizitätsmodul der Einbettungsmasse (3a, 3b) kleiner als der Dehnungselastizitätsmodul mindestens einer an die Einbettungsmasse (3a, 3b) angrenzenden Elastomermischung ist.

7. Luftreifen (100) nach einem der Ansprüche 5 bis 6, wobei die relative dielektrische Konstante der Einbettungsmasse (3a, 3b) kleiner als 10 ist.

8. Luftreifen (100) nach einem der Ansprüche 1 bis 7, wobei der passive Hochfrequenztransponder (1, 1ter) an einer Grenzfläche gelegen ist, die durch mindestens eine Oberfläche einer Elastomermischungslage (91, 92, 93, 94, 96) des Luftreifens (100) definiert wird.

9. Luftreifen (100) nach Anspruch 8, wobei, wenn die Grenzfläche durch eine andere Elastomermischungslage (91, 92, 93, 94, 96) oder eine Verstärkungslage (97) definiert wird, der passive Hochfrequenztransponder (1, 1ter) an der Grenzfläche in einem Abstand von mindestens 5 Millimetern von den Enden der Lagen (91, 92, 93, 94, 96, 97) gelegen ist.

10. Luftreifen (100) nach einem der Ansprüche 1 bis 7, wobei der passive Hochfrequenztransponder (1bis) im Inneren einer Elastomermischungslage (91, 92, 93, 94, 96) des Luftreifens (100) gelegen ist.

11. Luftreifen (100) nach Anspruch 10, wobei die erste Längsachse (11) der abstrahlenden Antenne (10) des passiven Hochfrequenztransponders (1bis) senkrecht zu der Dicke der Elastomermischungslage (91, 92, 93, 94, 96) verläuft.

12. Luftreifen (100) nach einem der Ansprüche 10 bis 11, wobei der passive Hochfrequenztransponder (1bis) in einem Abstand von mindestens 0,3 Millimetern von den Oberflächen der Elastomermischungslage (91, 92, 93, 94, 96) gelegen ist.

13. Luftreifen (100) nach einem der vorhergehenden Ansprüche, wobei das Verhältnis zwischen der Helixsteigung (P2) und dem Wicklungsdurchmesser (D2) bei jeder Windung des zweiten Bereichs (102) kleiner oder gleich 0,8 ist.

14. Luftreifen (100) nach einem der vorhergehenden Ansprüche, wobei, wenn der elektronische Teil (20) im Inneren der abstrahlenden Dipolantenne (10) platziert ist, der erste Innendurchmesser D1' der abstrahlenden Dipolantenne (10) in dem ersten Bereich (101, 101a, 101b) kleiner als der zweite Innendurchmesser D2' der abstrahlenden Dipolantenne (10) in einer zweiten Zone (102) ist und der elektronische Teil (20) in einen Zylinder einbeschrieben ist, dessen Rotationsachse parallel zu der ersten Längsachse (11) verläuft und dessen Durchmesser größer oder gleich dem ersten Innendurchmesser D1' der abstrahlenden Dipolantenne (10) ist.

## Claims

1. Tyre casing (100) that is toroidal in shape about a reference axis and equipped with a passive radiofrequency transponder (1, 1bis, 1ter) and comprises:
- a crown block (82) comprising a crown reinforcement (86) having an axial end (861) at each of its edges, and a tread (89), connected at each of its axial ends (821) to a bead (84) having an interior end (841) situated axially and radially on the inside of the bead (84) with respect to the reference axis, by a sidewall (83),
- a carcass reinforcement comprising at least one carcass reinforcement layer formed of mutually parallel reinforcing elements inserted between two skim layers of elastomer compound,
- the at least one carcass reinforcing layer being anchored in each of the beads (84) by being turned up around an annular bead wire (85) to form a main part of the at least one carcass reinforcement layer (87), extending from one bead wire (85) to the other and situated radially on the inside with respect to the crown block (82), and a turn-up of the at least one carcass reinforcement layer (88) in each of the beads (84),
- a second layer of elastomer compound (93) forming the exterior surface of the tyre casing (100) in the region of the bead (84), said second layer of elastomer compound (93) being intended to come into contact with the rim,
- a third layer of elastomer compound (94) situated radially on the outside in contact with the second layer of elastomer compound (93) forming the exterior surface of said sidewall (83),
- the passive radiofrequency transponder (1, 1bis, 1ter) comprising an electronic portion (20) and a radiating dipole antenna (10) consisting of a single-strand helicoidal spring defining a helix pitch P, a winding diameter D, a midplane (19) and a wire diameter defining an interior diameter (13) and an exterior diameter (15) of the radiating antenna (10), of which the length (L0) is designed to communicate on a frequency band with an external radiofrequency reader defining a first longitudinal axis (11), a central region and two lateral regions along the first longitudinal axis (11),
- the electronic portion (20) comprising an electronic chip and a primary antenna of coil type comprising at least one turn, and thus defining a second longitudinal axis and a midplane (21) perpendicular to the second longitudinal axis, said primary antenna being electrically connected to the electronic chip and electromagnetically coupled to the radiating dipole antenna (10), the primary antenna being circumscribed inside a cylinder of which the axis of revolution is parallel to the second longitudinal axis and in which the diameter is greater than or equal to one third of the interior diameter (13) of the radiating antenna (10) situated plumb with the primary antenna,
- said passive radiofrequency transponder (1, 1bis, 1ter) is arranged in such a way that the first (11) and second longitudinal axes are parallel and that the midplane of the primary antenna (21) is positioned in the central region of the helical spring (10),
- the radiating dipole antenna (10) comprising a second region (102) in which the radiating dipole antenna (10) is situated plumb with the electronic portion (20) and a first region (101, 101a, 101b) in which the radiating dipole antenna (10) is not situated plumb with the electronic portion (20), the ratio between the helix pitch (P1) and the winding diameter (D1) for at least one loop of the helical spring in the first region (101, 101a, 101b) being greater than 0.8, the ratio between the helix pitch (P1) and the winding diameter (D1) of each loop of the helical spring in the first region (101, 101a, 101b) of the radiating dipole antenna (10) being less than 3,
**characterized in that** the radiating dipole antenna (10) is situated plumb with at least two reinforcement elements of the main part of the at least one carcass reinforcement layer (87), i. e. the orthogonal projection of the radiating dipole antenna (10) onto the plane defined by two parallel reinforcing elements of the main part of the at least one carcass reinforcement layer intersects these two reinforcing elements when the tyre casing is in the green tyre state, **in that** the passive radiofrequency transponder is situated axially on the outside of the interior end (841) of the bead (84) and radially between the radially outermost end (851) of the bead wire (85) and the axial end (861) of the crown reinforcement (86), preferably on the inside of the tyre casing (100) **and in that** the first pitch (P1) of the radiating dipole antenna (10), which corresponds to the helix pitch of the radiating dipole antenna (10) in the first region (101,101a, 101b) is greater than the second pitch (P2) of the radiating dipole antenna (10) which corresponds to the helix pitch of the radiating dipole antenna (10) in the second region (102) in which the radiating dipole antenna (10) is situated plumb with the electronic portion (20).

2. Tyre casing (100) according to Claim 1, wherein the tyre casing (100) comprises at least a fourth layer of elastomer compound (92) situated axially on the outside of the main part of the at least one carcass reinforcement layer (87) and axially on the inside of the second (93) and/or third (94) layer of elastomer compound.

3. Tyre casing (100) according to one of Claims 1 to 2, wherein, with the tyre casing (100) comprising at least one airtight layer of elastomer compound (90) situated furthest towards the inside of the tyre casing (100), the tyre casing (100) comprises at least a fifth layer of elastomer compound (96) axially on the inside of the main part of the at least one carcass reinforcement layer (87).

4. Tyre casing (100) according to one of Claims 1 to 3, wherein the tyre casing (100) comprises at least one reinforcement layer of reinforcers (97) which is formed of reinforcing elements inserted between two skim layers of rubber compound.

5. Tyre casing (100) according to one of Claims 1 to 4, wherein the passive radiofrequency transponder (1, 1bis, 1ter) is partially encapsulated in a mass of electrically insulating elastomer compound (3a, 3b).

6. Tyre casing (100) according to Claim 5, wherein the tensile elastic modulus of the encapsulating mass (3a, 3b) is lower than the tensile elastic modulus of at least one elastomer compound adjacent to said encasing mass (3a, 3b).

7. Tyre casing (100) according to one of Claims 5 to 6, wherein the relative dielectric constant of the encapsulating mass (3a, 3b) is lower than 10.

8. Tyre casing (100) according to one of Claims 1 to 7, wherein the passive radiofrequency transponder (1, 1ter) is situated at an interface defined by at least a surface of a layer of elastomer compound (91, 92, 93, 94, 96) of said tyre casing (100).

9. Tyre casing (100) according to Claim 8, wherein, with the interface being defined by another layer of elastomer compound (91, 92, 93, 94, 96) or a reinforcement layer (97), the passive radiofrequency transponder (1, 1ter) is situated at a distance of at least 5 millimetres from the ends of the layers (91, 92, 93, 94, 96, 97) at the interface.

10. Tyre casing (100) according to one of Claims 1 to 7, wherein the passive radiofrequency transponder (1bis) is situated on the inside of a layer of elastomer compound (91, 92, 93, 94, 96) of said tyre casing (100).

11. Tyre casing (100) according to Claim 10, wherein the first longitudinal axis (11) of the radiating antenna (10) of said passive radiofrequency transponder (1bis) is perpendicular to the thickness of the layer of elastomer compound (91, 92, 93, 94, 96)

12. Tyre casing (100) according to one of Claims 10 and 11, wherein the passive radiofrequency transponder (1bis) is situated at a distance of at least 0.3 millimetres from the surfaces of the layer of elastomer compound (91, 92, 93, 94, 96).

13. Tyre casing (100) according to one of the preceding claims, wherein the ratio between the helix pitch (P2) and the winding diameter (D2) for each loop of the second region (102) is less than or equal to 0.8.

14. Tyre casing (100) according to one of the preceding claims, wherein, with the electronic portion (20) being placed inside the radiating dipole antenna (10), the first inside diameter D1' of the radiating dipole antenna (10) in the first region (101, 101a, 101b) is smaller than the second inside diameter D2' of the radiating dipole antenna (10) in a second region (102), and the electronic portion (20) is circumscribed by a cylinder of which the axis of revolution is parallel to the first longitudinal axis (11) and of which the diameter is larger than or equal to the first inside diameter D1' of the radiating dipole antenna (10).
